# EUROPEAN PATENT APPLICATION

(11) **EP 4 387 136 A1**
(43) Date of publication of application: **19.06.2024**
(21) Application number: 22869228.1
(22) Date of filing: 14.09.2022
(51) Int. Cl.: H04L 1/00, H04W 72/12

(54) **ELECTRONIC DEVICE AND METHOD FOR WIRELESS COMMUNICATION SYSTEM, AND STORAGE MEDIUM**

(30) Priority: 17.09.2021 CN 202111089764
(71) Applicant: Sony Group Corporation, Tokyo 108-0075 (JP)
(72) Inventor: FAN, Tingting, Beijing 100028 (CN)
(74) Representative: D Young & Co LLP
(86) International application number: PCT/CN2022/118585
(87) International publication number: WO 2023/040859

(57) **Abstract**

The present invention relates to an electronic device and a method for a wireless communication system, and a storage medium. An electronic device used for a control device side of a wireless communication system comprises: a processing circuit, configured to execute search space set (SSS) switching on the basis of a listening capability of a terminal device by means of the following operations: receiving from the terminal device capability information indicating one or more listening capabilities supported by the terminal device and a listening capability identifier associated with each listening capability; associating one or more SSSs associated with each of the one or more listening capabilities with a listening capability identifier associated with the listening capability; sending SSS configuration information to the terminal device, the SSS configuration information at least indicating a listening capability identifier associated with each SSS; and sending to the terminal device downlink control information (DCI) comprising a first listening capability identifier, so as to indicate one or more SSSs to be listened to by the terminal device.

## Description

### TECHNICAL FIELD

The present disclosure generally relates to wireless communication systems, and specifically to techniques related to blind detection.

### BACKGROUND

Under current communication technologies (for example, LTE, 5G, etc.), before decoding Physical Downlink Control Channels (PDCCHs), terminal devices do not know information required for decoding, such as location, structure (for example, aggregation levels, interleaving parameters, etc.) and scrambling code (for example, Radio Network Tempory Identity (RNTI), etc.) of resources to be decoded. The terminal devices actually only know that PDCCHs may be carried on resources within a certain range in a downlink resource grid. Therefore, the terminal devices need to try to decode the PDCCHs within this range, that is, perform blind detection.

When performing blind detection, terminal devices need to try to decode multiple candidate PDCCHs. For example, the multiple candidate PDCCHs may correspond to different Downlink Control Information (DCI) formats and/or aggregation levels. A subset of the multiple candidate PDCCHs maybe configured as a Search Space Set (SSS) . The terminal devices can perform blind detection on one or more SSSs according to an explicit or implicit instruction from a base station. At present, the following technical concept already exists: dividing multiple SSSs into at least two Search Space Set Groups (SSSGs) provided with different monitoring frequencies, and switching SSSGs for different situations (for example, whether it is during the Channel Occupancy Time (COT)), so as to perform monitoring on search space set groups with different densities.

Currently, a technical concept called PDCCH skipping is also being discussed. Under this technical concept, monitoring of the PDCCH can be skipped under some conditions within a specific SSSG to further reduce power consumption.

The above existing technical concepts only set SSSGs that support sparse monitoring or dense monitoring for all UEs uniformly and performs switching between SSSGs, and the control of PDCCH monitoring is only limited to the dimension of "restricting SSS". However, there are other factors that lead to switching of one or more SSSs, and the control of monitoring is not only limited to switching SSSGs.

In view of the above, a more flexible solution is needed for controlling monitoring on one or more SSSs.

### SUMMARY

The present disclosure proposes a solution related to blind detection. Specifically, the present disclosure provides an electronic device, a method and a storage medium for a wireless communication system.

One aspect of the present disclosure relates to an electronic device for a control device side of a wireless communication system, comprising: a processing circuitry configured to perform Search Space Set, SSS switching based on monitoring capability of a terminal device by: receiving, from the terminal device, capability information indicating one or more monitoring capabilities supported by the terminal device and monitoring capability identifiers, each associated with each monitoring capability; associating one or more SSSs associated with each of the one or more monitoring capabilities with a monitoring capability identifier associated with the monitoring capability; transmitting, to the terminal device SSS configuration information, wherein, the SSS configuration information at least indicates a monitoring capability identifier associated with each SSS; and transmitting, to the terminal device, Downlink Control Information, DCI comprising a first monitoring capability identifier, so as to indicate one or more SSSs to be monitored by the terminal device.

Another aspect of the present disclosure relates to a method for a control device side of a wireless communication system, comprising: performing Search Space Set, SSS switching based on monitoring capability of a terminal device by: receiving, from the terminal device, capability information indicating one or more monitoring capabilities supported by the terminal device and monitoring capability identifiers, each associated with each monitoring capability; associating one or more SSSs associated with each of the one or more monitoring capabilities with a monitoring capability identifier associated with the monitoring capability; transmitting, to the terminal device the SSS configuration information, wherein, the SSS configuration information at least indicates a monitoring capability identifier associated with each SSS; and transmitting, to the terminal device, Downlink Control Information, DCI comprising a first monitoring capability identifier, so as to indicate the one or more SSSs to be monitored by the terminal device.

Another aspect of the present disclosure relates to an electronic device for a terminal device side of a wireless communication system, comprising: a processing circuitry configured to perform Search Space Set, SSS switching based on monitoring capability of the electronic device by: transmitting, to a base station, capability information indicating one or more monitoring capabilities supported by the electronic device and monitoring capability identifiers, each associated with each monitoring capability, such that the base station is able to associate one or more SSSs associated with each monitoring capability of the one or more monitoring capabilities with a monitoring capability identifier associated with the monitoring capability; receiving, from the base station, the SSS configuration information, wherein, the SSS configuration information at least indicates a monitoring capability identifier associated with each SSS; and receiving, from the base station, Downlink Control Information, DCI comprising a first monitoring capability identifier, the DCI indicating one or more SSSs to be monitored to by the electronic device. Another aspect of the present disclosure relates to a method for a terminal device side of a wireless communication system, comprising: performing Search Space Set, SSS switching based on monitoring capability of the terminal device by: transmitting, to a base station, capability information indicating one or more monitoring capabilities supported by the terminal device and monitoring capability identifiers, each associated with each monitoring capability, such that the base station is able to associating one or more SSSs associated with each of the one or more monitoring capabilities with a monitoring capability identifier associated with the monitoring capability; receiving SSS configuration information from the base station, wherein, the SSS configuration information at least indicates a monitoring capability identifier associated with each SSS; and receiving, from the base station, Downlink control information, DCI comprising a first monitoring capability identifier, the DCI indicating one or more SSSs to be monitored by the terminal device.

Another aspect of the present disclosure relates to an electronic device for a control device side of a wireless communication system, comprising: a processing circuitry configured to: transmit, to the terminal device, Downlink Control Information, DCI comprising information indicating one or more Search Space Sets, SSSs to be monitored, wherein, the DCI includes information indicating a DCI format or size, and wherein, a timer is configured to the terminal device, such that the terminal device only monitors, on the one or more SSSs, candidate Physical Downlink Control Channels, PDCCHs complying with the DCI format or size indicated by the information in the DCI within a predetermined period specified by the timer, and restores to monitor all candidate PDCCHs corresponding to all DCI formats and sizes when the predetermined period specified by the timer expires.

Another aspect of the present disclosure relates to a method for a control device side of a wireless communication system, comprising: transmitting, to a terminal device, Downlink Control Information, DCI comprising information indicating one or more Search Space Sets, SSSs to be monitored, wherein, the DCI includes information indicating a DCI format or size, and wherein, a timer is configured to a terminal device, such that the terminal device only monitors, on the one or more SSSs, candidate Physical Downlink Control Channels, PDCCHs complying with the DCI format or size indicated by the information in the DCI within a predetermined period specified by the timer, and restores to monitor all candidate PDCCHs corresponding to all DCI formats and sizes when the predetermined period specified by the timer expires.

Another aspect of the present disclosure relates to an electronic device for a terminal device side of a wireless communication system, comprising: a processing circuitry configured to: receive, from a base station, Downlink Control Information, DCI comprising information indicating one or more Search Space Sets, SSSs to be monitored, wherein, the DCI includes information indicating a DCI format or size, and wherein, the electronic device is configured with a timer by the base station, and the electronic device only monitors, on the one or more SSSs, candidate Physical Downlink Control Channels, PDCCHs complying with the DCI format or size indicated by the information in the DCI within a predetermined period specified by the timer, and restores to monitor all candidate PDCCHs corresponding to all DCI formats and sizes when the predetermined period specified by the timer expires.

Another aspect of the present disclosure relates to a method for a terminal device side of a wireless communication system, comprising: receiving, from a base station, Downlink Control Information, DCI comprising information indicating one or more Search Space Sets, SSSs to be monitored, wherein, the DCI includes information indicating a DCI format or size, and wherein, the terminal device is configured with a timer by the base station, and the terminal device only monitors, on the one or more SSSs, candidate Physical Downlink Control Channels, PDCCHs complying with the DCI format or size indicated by the information in the DCI within a predetermined period specified by the timer, and restores to monitor all candidate PDCCHs corresponding to all DCI formats and sizes when the predetermined period specified by the timer expires.

Another aspect of the present disclosure relates to a non-transitory computer-readable storage medium having executable instructions stored thereon, which, when executed, implement the methods as described in the above aspects.

Another aspect of the present disclosure relates to a device. The device comprises: a processor and a storage having executable instructions stored thereon, which, when executed, implement the methods as previously described.

The above summary is provided to summarize some exemplary embodiments in order to provide a basic understanding to various aspects of the subject matter described herein. Therefore, above features are merely examples and should not be construed as limiting the scope or spirit of the subject matter described herein in any way. Other features, aspects, and advantages of the subject matter described herein will become apparent from the Detailed Description described below in conjunction with the drawings.

### BRIEF DESCRIPTION OF THE DRAWINGS

A better understanding of the present disclosure can be obtained when the following detailed description of embodiments is considered in conjunction with the accompanying drawings. The same or similar reference numbers are used throughout various drawings to denote the same or similar components. The accompanying drawings, along with the following detailed description, are incorporated in and constitute a part of this specification, to illustrate embodiments of the disclosure and to explain the principles and advantages of the disclosure. Wherein:
FIG. 1 schematically illustrates a conceptual configuration of an electronic device on a control device side according to a first embodiment of the present disclosure;
FIG. 2 schematically illustrates a conceptual operation flow on the control device side according to the first embodiment of the present disclosure;
FIG. 3A schematically illustrates associations between SSSs and different types of monitoring spans according to the first embodiment of the present disclosure;
FIG. 3B schematically illustrates associations between SSSs and different monitoring span groups according to the first embodiment of the present disclosure;
FIG. 4 schematically illustrates the association between SSSs and different monitoring span groups and SSSGs respectively according to the first embodiment of the present disclosure;
FIG. 5 schematically illustrates a conceptual configuration of an electronic device on a terminal device side according to the first embodiment of the present disclosure;
FIG. 6 schematically illustrates a conceptual operation flow on the terminal device side according to the first embodiment of the present disclosure;
FIG. 7 schematically illustrates an exemplary information interaction according to the first embodiment of the present disclosure;
FIG. 8 schematically illustrates a conceptual configuration of a control device side according to a second embodiment of the present disclosure;
FIG. 9 schematically illustrates a conceptual operation flow of an electronic device on the control device side according to the second embodiment of the present disclosure;
FIG. 10 schematically illustrates a conceptual configuration of an electronic device on a terminal device side according to the second embodiment of the present disclosure;
FIG. 11 schematically illustrates a conceptual operation flow on the terminal device side according to the second embodiment of the present disclosure;
FIG. 12 schematically illustrates an exemplary information interaction according to the second embodiment of the present disclosure;
FIG. 13 is a block diagram of an example structure of a personal computer as an information processing device that can be employed in an embodiment of the present disclosure;
FIG. 14 is a block diagram showing a first example of a schematic configuration of a gNB to which the technology of the present disclosure can be applied;
FIG. 15 is a block diagram showing a second example of a schematic configuration of a gNB to which the technology of the present disclosure can be applied;
FIG. 16 is a block diagram showing an example of a schematic configuration of a smart phone to which the technology of the present disclosure can be applied; and
FIG. 17 is a block diagram showing an example of a schematic configuration of a car navigation device to which the technology of the present disclosure can be applied.

While the embodiments described in this disclosure may be susceptible to various modifications and alternatives, specific embodiments thereof are illustrated by way of example in the accompanying drawings and are described in detail herein. It should be understood, however, that the drawings and detailed description thereof are not intended to limit the embodiments to the particular forms disclosed; rather, it is intended to cover all modifications, equivalents and alternative falling within the spirit and scope of the claims.

### DETAILED DESCRIPTION

The following describes representative applications of various aspects of the device, method and the like according to the present disclosure. The description of these examples is merely to add context and help to understand the described embodiments. Therefore, it is clear to those skilled in the art that the embodiments described below can be implemented without some or all of the specific details. In other instances, well-known process steps have not been described in detail to avoid unnecessarily obscuring the described embodiments. Other applications are also possible, and the solution of the present disclosure is not limited to these examples.

Typically, a wireless communication system includes at least a control device and a terminal device, and the control device can provide communication services for one or more terminal devices.

In this disclosure, the term "base station" or "control device" has the full breadth of its ordinary meaning and includes at least a wireless communication station that is a part of a wireless communication system or radio system to facilitate communication. As an example, a base station may be an eNB of the 4G communication standard, a gNB of the 5G communication standard, a remote radio head, a wireless access point, a drone control tower, or a communication apparatus performing similar functions. In this disclosure, "base station" and "control device" may be used interchangeably, or "control device" may be implemented as a part of "base station". Application examples of the base station/terminal device will be described in detail below by taking the base station as an example in conjunction with the accompanying drawings.

In this disclosure, the term "terminal device" or "user equipment (UE)" has the full breadth of its ordinary meaning and includes at least a terminal device that is a part of a wireless communication system or radio system to facilitate communication. As an example, a terminal device may be, for example, a mobile phone, a laptop, a tablet, a vehicle-mounted communication device, a wearable device, a sensor, or the like, or a component thereof. In this disclosure, "terminal device" and "user equipment" (hereinafter may be simply referred to as "UE") may be used interchangeably, or "terminal device" may be implemented as a part of "user equipment".

In this disclosure, the terms "control device side"/"base station side" have the full breadth of their ordinary meaning, generally indicating the side of a communication system downlink that transmits data. Similarly, the terms "terminal device side"/"user equipment side" have the full breadth of their ordinary meaning and may accordingly indicate the side of the communication system downlink that receives data.

In this disclosure, unless otherwise stated, the term "monitoring" refers to attempting to decode candidate PDCCHs on one or more SSSs during blind detection, wherein, each candidate PDCCH may correspond to a specific DCI format and a specific aggregation level.

It should be noted that, although embodiments of the present disclosure are mainly described below based on a communication system including a base station and a user equipment, these descriptions can be correspondingly extended to situations of communication systems comprising any other type of control device side and terminal device side. For example, for the case of downlink, operations on a control device side may correspond to operations of a base station, while operations of a user equipment side may accordingly correspond to operations of a terminal device.

Traditionally, when performing blind detection, as described in the background, the following technical concept already exists: dividing SSSs into at least two SSSGs provided with different monitoring densities (in other words, Monitoring Occasion (MO) densities), and switching SSSGs for different situations, so as to perform monitoring on different search space set groups, thereby achieving control of the monitoring frequency. For example, at any time other than a COT period, since information known by a UE is limited, monitoring needs to be performed in a denser manner, for example, monitoring is performed on an SSSG with denser monitoring occasions. While, during the COT period, since the UE has obtained some additional information (for example, the UE already knows COT configuration information), monitoring may be performed appropriately in a sparser manner, for example, monitoring is performed on an SSSG with sparser monitoring occasions. This switching of SSSGs according to the density of monitoring allows the UE to reduce power consumption.

In addition, in order to further reduce power consumption, as described in the background, a technical concept called PDCCH skipping is also currently being discussed. Under this technical concept, a special SSSG is constructed. Specifically, this special SSSG may be an empty SSSG that does not include any SSS, such that when switching to this SSSG, the UE does not perform monitoring of PDCCHs. Alternatively, this special SSSG may be an SSSG consisting of specific SSSs configured such that the UE only monitors these SSSs under specific conditions (e.g., Hybrid Automatic Repeat reQuest (HARQ) Negative Acknowledgment (NACK), or Round-Trip Time (RTT) / Transceiver (ReTx) timer).

These existing discussions only cover very limited ways for controlling SSSs monitoring. In practice, however, more flexible control of monitoring on one or more SSSs is needed.

Specifically, this disclosure has noticed the following two aspects that can be improved:
In one aspect, with the development of communication technology and the expansion of vertical services supported by the communication technology, there are more and more UEs with different capabilities. For example, there are Reduced Capability (redcap) NR devices, which are mainly used in scenarios such as industrial wireless sensor networks, video surveillance and wearable devices that require reducing power consumption and extending battery life as much as possible, and which may only be able to perform monitoring with a small number of times within a predetermined monitoring period. For another example, there are also UEs that support Ultra-reliable and Low Latency Communications (URLLC), which may have a low tolerance for delays and therefore expect to be able to detect PDCCHs with a delay as low as possible. For yet another example, there are advanced UEs that support various PDCCH monitoring capabilities, which may support different types of monitoring rules, in other words, have different monitoring capabilities. For example, different monitoring capabilities may represent supporting different densities and/or different times of monitoring within a time period, and it may be necessary to switch the monitoring capabilities to be applied according to the usage scenario of the UE.

However, the existing technical concepts only set SSSGs uniformly for sparse or dense monitoring for all types of UEs, and there is no solution to set up SSS switching based on respective UEs, especially monitoring capabilities supported by the UEs. Therefore, SSS switching based on monitoring capability of a UE can be considered, so as to achieve a more fine-grained, flexible and adjustable SSS switching solution.

In the other aspect, as introduced above, the existing technical concepts only propose to control to reduce monitoring by setting up special SSSs to form a special SSSG. These existing technical concepts are only to reduce monitoring from the SSS perspective. In practices, the present disclosure has noticed that monitoring can also be reduced by reducing the number of candidate PDCCHs to be monitored within an SSS. For example, the present disclosure has noticed that in some cases, control information to be transmitted on the downlink may be concentrated on some specific formats or sizes of DCI. Therefore, it may be desired for the UE to perform monitoring only on candidate PDCCHs complying with these specific formats or sizes, instead of monitoring all candidate PDCCHs. Therefore, it may consider to limit the number of candidate PDCCHs to be monitored by limiting the DCI format or size, so as to achieve adaptive adjustment of the times of monitoring.

In view of the above two aspects, the present disclosure proposes a solution to flexibly control monitoring on one or more SSSs.

### First embodiment

According to a first embodiment of the present disclosure, during blind detection, SSS switching based on monitoring capability of a UE may be performed. For example, the UE may transmit capability information indicating one or more monitoring capabilities it supports and monitoring capability identifiers, each associated with each monitoring capability to a base station. The base station may associate one or more SSSs associated with each monitoring capability with the received monitoring capability identifier associated with the monitoring capability, and transmit SSS configuration information at least indicating these associations between the SSSs and the monitoring capability identifiers to the UE. The base station may indicate one or more SSSs to be monitored by the UE by transmitting DCI to the UE that comprises one or more specific monitoring capability identifiers.

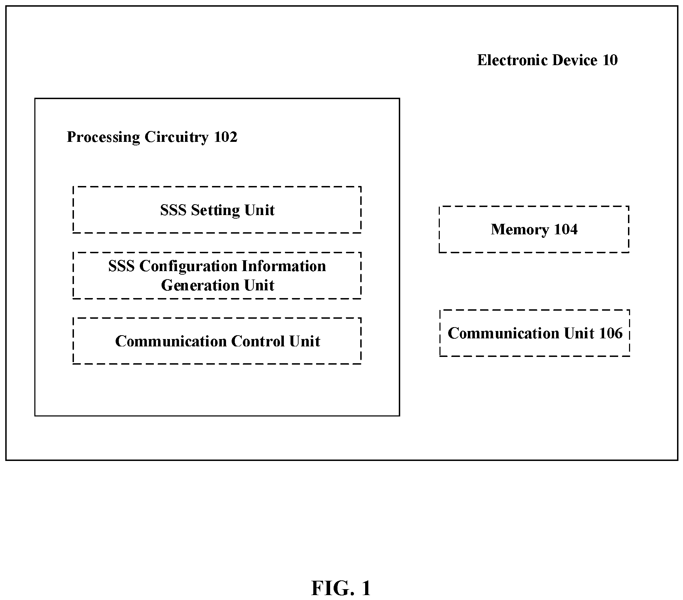

The first embodiment will be described in detail below with reference to FIGS. 1-8.

### Structure and operation flow of a base station according to the first embodiment of the present disclosure

First, a conceptual structure of an electronic device 10 for a control device/base station according to an embodiment of the present disclosure will be described with reference to FIG. 1.

As shown in FIG. 1, the electronic device 10 may include a processing circuitry 102. The processing circuitry 102 may be configured to perform SSS switching based on monitoring capability of the UE by: receiving, from the UE, capability information indicating one or more monitoring capabilities supported by the UE and monitoring capability identifiers, each associated with each monitoring capability; associating one or more SSSs associated with each of the one or more monitoring capabilities with a monitoring capability identifier associated with the monitoring capability; transmitting, to the UE, SSS configuration information, wherein, the SSS configuration information at least indicates a monitoring capability identifier associated with each SSS; and transmitting, to the UE, DCI comprising a first monitoring capability identifier, so as to indicate one or more SSSs to be monitored by the UE.

The processing circuitry 102 may be in the form of a general-purpose processor or a special-purpose processing circuit, such as an ASIC. For example, the processing circuitry 102 can be constructed by a circuit (hardware) or a central processing device (such as, a Central Processing Unit (CPU)). In addition, a program (software) for operating the circuit (hardware) or the central processing device may be carried on the processing circuitry 102. The program can be stored in a memory (such as arranged in a memory 104) or an external storage medium connected from outside, and downloaded via a network (such as the Internet).

In one implementation, the processing circuitry 102 may include an SSS setting unit. The SSS setting unit may set, for a UE, according to monitoring capability reported by the UE, one or more SSSs corresponding to monitoring capability, on which monitoring is to be perform, and associate each monitoring capability identifier (hereinafter also referred to as monitoring capability ID for short) with one or more SSSs corresponding to the monitoring capability identified by the monitoring capability identifier.

In one implementation, the processing circuitry 102 may also include an SSS configuration information generation unit. The SSS configuration information generating unit may generate SSS configuration information, for example. The UE may obtain information related to the SSS configured by the base station for it by using the SSS configuration information, for using in blind detection. In particular, the SSS configuration information according to the embodiment may at least indicate monitoring capability IDs, each associated with each SSS, that is, indicate the association between each SSS and respective monitoring capability ID.

Furthermore, the processing circuitry 102 may also include a communication control unit that controls communication with the UE (optionally via the communication unit 106). For example, the communication control unit may control receiving from the UE capability information indicating one or more monitoring capabilities supported by the UE and monitoring capability IDs, each associated with each monitoring capability; control transmitting the above SSS configuration information to the UE; control transmitting to the UE information indicating one or more SSSs to be monitored subsequently; and optionally, control receiving from the UE a monitoring capability IE associated with the one or more SSSs to which the UE expects to switch, and so on.

Optionally, the electronic device 10 may also include a memory 104 and a communication unit 106 shown in dotted lines in the figure. In addition, the electronic device 20 may also include other components not shown, such as a radio frequency link, a baseband processing unit, a network interface, a processor, a controller, and the like. The processing circuitry 102 may be associated with the memory 104 and/or the communication unit 106. For example, the processing circuitry 102 may be directly or indirectly (e. g., other components may be connected therebetween) connected to the memory 104 for data access. For another example, the processing circuitry 102 may be directly or indirectly connected to the communication unit 106 to transmit radio signals via the communication unit 106 and to receive radio signals via the communication unit 106.

The memory 104 may store various information generated by the processing circuitry 102 (for example, the monitoring capability and respective monitoring capability ID received from the UE, parameters/information required to generate SSS configuration information, and the generated SSS configuration information, etc.), programs and data for operations of the electronic device 10, data to be transmitted by the communication unit 106, etc. The memory 104 is drawn with dashed lines because it could also be located within the processing circuitry 102 or external to the electronic device 10. The memory 104 may be a volatile memory and/or a non-volatile memory. For example, the memory 104 may include, but is not limited to, a random-access memory (RAM), a dynamic random-access memory (DRAM), a static random-access memory (SRAM), a read only memory (ROM), and a flash memory.

The communication unit 106 may be configured to communicate with a terminal device under the control of the processing circuitry 102 (e.g., the communication control unit). In one example, the communication unit 106 may be implemented as a transmitter or transceiver, including communication components such as an antenna array and/or a radio frequency link.

Although the processing circuitry 102 is shown as being separate from the communication unit 106 in FIG. 1, the processing circuitry 102 may also be implemented to include the communication unit 106, for example, in combination with a communication control unit. Additionally, the processing circuitry 102 may also be implemented to include one or more other components in the electronic device 10, or the processing circuitry 102 may be implemented as the electronic device 10 itself. In actual implementation, the processing circuitry 102 may be implemented as a chip (such as an integrated circuit module comprising a single wafer), a hardware component, or a complete product.

It should be noted that the above units are only logical modules divided according to specific functions they implement, and are not used to limit specific implementations, for example, they can be implemented in software, hardware, or a combination of software and hardware. In practical implementations, each of the above units may be implemented as an independent physical entity, or may also be implemented by a single entity (for example, a processor (CPU or DSP, etc.), integrated circuit, etc.). In addition, each of the above units is shown with dotted lines in the drawings to indicate that these units may not actually exist, and the operations/functions they realized may be realized by the processing circuitry itself.

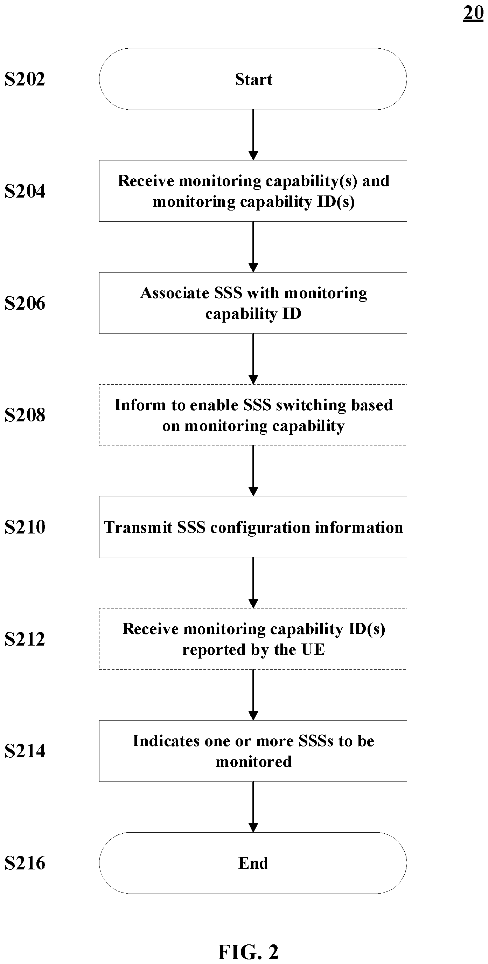

Next, various operations implemented by the electronic device 10 as a base station will be described in detail with reference to the conceptual operation flow 20 of a control device/base station side shown in FIG. 2.

The operation of the base station starts at S202.

At S204, the base station receives from a UE capability information indicating one or more monitoring capabilities supported by the UE and monitoring capability Ids, each associated with each monitoring capability.

According to the present disclosure, different monitoring capabilities may represent support for monitoring with different densities and/or different times within a period of time. Specifically, monitoring capabilities comprise one or more of: one or more types of monitoring spans, one or more span groups each consisting of a portion or all of multiple types of monitoring spans, and per-slot monitoring capability and per-multi-slot monitoring capability.

For example, the UE may support the per-slot monitoring capability, e.g., as specified in the 3GPP R15 standard for NR. With such a monitoring capability, the upper limit of the number of times that can be monitored within each time slot (in other words, the number of times of blind detections of PDCCHs) is limited to a relatively small value. When reporting the monitoring capability, the UE may directly signal that it supports the per-slot monitoring capability. Similarly, the UE may also support the per-multi-slot monitoring capability.

In order to improve blind detection capabilities (e.g., the number of times of monitoring and the reliability of blind detection, etc.), some standards (e.g., 3GPP R16 for NR) specify blind detection for per monitoring span. Here, the span (or window) is a series of symbols to be monitored by a UE in one time slot, and one time slot may contain multiple spans. In the extended case, for example, as is being discussed in 3GPP R17 for NR, a span may also be defined across multiple time slots (may also be referred to as an extended span), in which case one span may be set across two adjacent time slots, and multiple time slots may jointly contain multiple monitoring spans. Regardless of whether it is a per-slot monitoring span or a multi-slot monitoring span, the upper limit of the number of times of monitoring is set according to the monitoring span (may also be referred to as blind detection time window).

The UE may support one or more types of monitoring spans, for example, one or more types of monitoring spans under a per-slot monitoring span, and/or one or more types of monitoring spans under a multi-slot monitoring span. Here, the types of monitoring spans are classified according to the following two factors (X, Y):
X - the minimum interval between the first symbols of two consecutive spans, and
Y- the maximum monitoring time length of span.
Under different types of monitoring spans, the upper limits of the number of times that can be monitored within one span are different. When reporting the monitoring capability, the UE may directly report the types of monitoring spans it supports. For example, the UE may directly report various combinations of (X, Y) it supports, such as (2, 2), (4, 3), (7, 3) and so on.

Further, one or more types of monitoring spans supported by the UE may be combined to form a span group. Therefore, monitoring capabilities reported by the UE may include one or more span groups, each consisting of a portion or all of multiple types of monitoring spans supported by the UE. For example, using the (X, Y) notation described above again, the span group supported by the UE may be ((2, 2), (4, 3)).

It should be noted that the monitoring capabilities of the UE are not limited to those capabilities detailed above. The UE may also support any other suitable monitoring capabilities.

According to the present disclosure, when reporting one or more monitoring capabilities supported by the UE, the UE may report, together with the monitoring capability(s), monitoring capability Id(s), each associated with each monitoring capability. For example, assuming that the UE supports the following five monitoring capabilities:
- per-slot monitoring capability;
- (2, 2) type span;
- (4, 3) type span;
- (7, 3) type span; and
- a span group of ((2, 2), (4, 3)),
then, the UE may report the monitoring capabilities in the following ways:
- monitoring capability ID 0: per-slot monitoring capability;
- monitoring capability ID 1: (2, 2) type span;
- monitoring capability ID 2: (4, 3) type span;
- monitoring capability ID 3: (7, 3) type span; and
- monitoring capability ID 4: a span group of ((2, 2), (4, 3)).

It should be noted that the UE may report the monitoring capability(s) and corresponding monitoring capability ID(s) in any appropriate manner, as long as each monitoring capability can be associated with its monitoring capability ID.

Continuing to refer to FIG. 2, at S206, the base station may configure one or more SSSs for each monitoring capability of the UE according to relevant configuration parameters, and associate one or more SSSs associated with each monitoring capability with a monitoring capability ID associated with the monitoring capability. The SSS(s) may be configured for each capability through configuration parameters in any appropriate manner, for example, as specified in the 3GPP standards, which will not be described in detail herein.

According to the present disclosure, one or more SSSs configured for each monitoring capability need to be associated with a monitoring capability ID associated with the monitoring capability. For example, a base station may add parameter configuration regarding indication/configuration of the monitoring capability ID when configuring the SSS (s), such that the SSS (s) configured for a specific monitoring capability can be mapped to the monitoring capability ID associated with the monitoring capability. It can be understood that the manner of associating one or more SSSs associated with a monitoring capability with respective monitoring capability ID is not limited to the examples cited here, and the base station may perform this association by using any appropriate manner, as long as for any SSS, the base station can identify the monitoring capability ID associated with it.

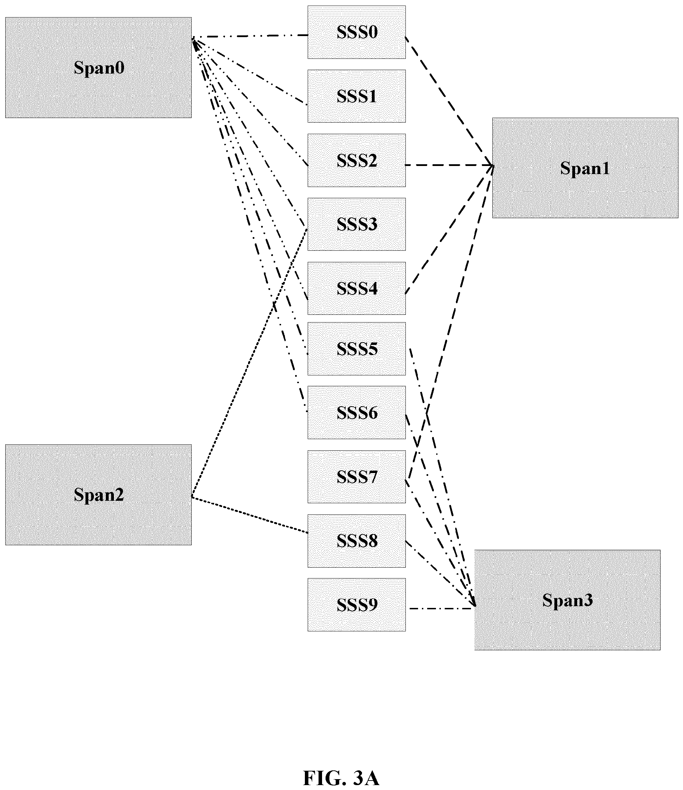

FIG. 3A shows the association between SSS 0-9 and multiple monitoring capabilities (here multiple different types of monitoring spans). As shown in the figure, for a span with the monitoring capability ID 0, the base station configures seven SSSs, i.e. SSS 0-6. For a span with monitoring capability ID 1, the base station configures four SSSs, i.e. SSS 0, SSS 2, SSS 4, SSS 7. For a span with monitoring capability ID 2, the base station configures two SSSs, i.e. SSS 3 and SSS 8. For a span with monitoring capability ID 3, the base station configures five SSSs, i.e. SSS 5-9. It can be seen that there may be partial overlap in SSSs configured for different monitoring capabilities. That is to say, one SSS may be associated with one or more monitoring capability IDs. In addition, two different monitoring capability IDs may correspond to two sets of one or more SSSs that are identical, partially identical, or completely different.

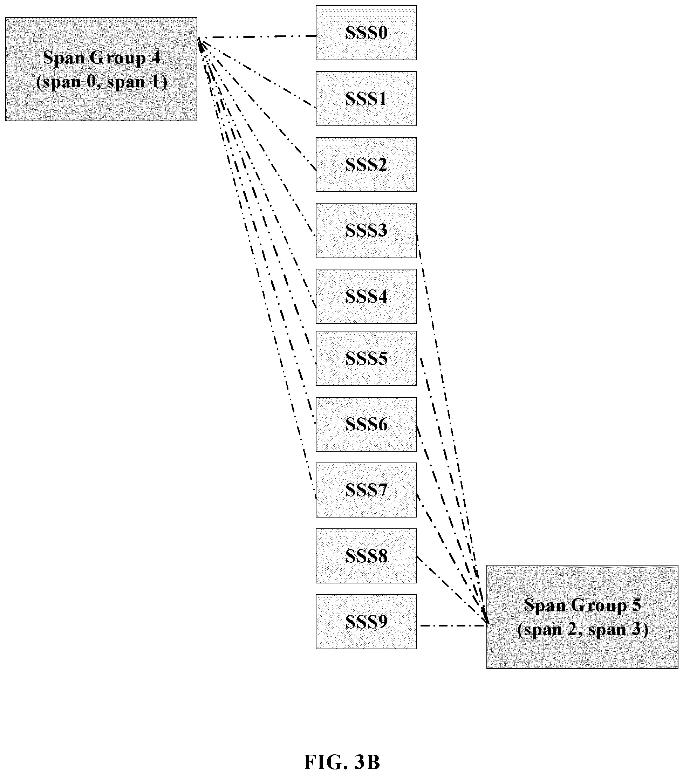

As detailed above, a UE may support multiple monitoring capabilities of different categories. For example, in addition to the different types of monitoring spans shown in FIG. 3A, the UE may also support different span groups. FIG. 3B further shows the association between SSS 0-9 and two span groups supported by the UE. It should be noted that, in order to more clearly represent the association between span groups and SSSs, FIG. 3B does not show the association between the SSS 0-9 and multiple different types of monitoring spans supported by the UE that has shown in FIG. 3A. As shown in FIG. 3B, the UE may support a span group consisting of span 0 and span 1 with a monitoring capability ID of 4, and a span group consisting of span 2 and span 3 with a monitoring capability ID of 5. Referring to the SSS configured for each span shown in FIG. 3A, the eight SSSs SSS 0-7 may be associated with the monitoring capability ID 4, while the six SSSs SSS 3, 5-9 may be associated with the monitoring capability ID 5.

Of course, FIGS. 3A and 3B are only shown to illustrate the association between SSSs and monitoring capabilities . In the case that a UE supports more or less monitoring capabilities, more or less such associations may also exist accordingly.

Continuing to refer to FIG. 2, in S210, the base station transmits the SSS configuration information to the UE. According to the present disclosure, the SSS configuration information may at least indicate a monitoring capability ID associated with each SSS, such that the UE can also know the correspondence between each SSS and its different capabilities. In addition, according to the SSS configuration information, the UE may know what kind of SSS the base station has configured for it (for example, as known to those skilled in the art, parameters for determining information such as a Control Resource Set (CORESET), an aggregation level, a detection cycle etc., associated with the SSS) . For example, the base station may transmit the SSS configuration information to the UE by using a Radio Resource Control (RRC) signaling.

Next, at S214, the base station may indicate to the UE one or more SSSs to be monitored by the UE. The base station may explicitly indicate to the UE that the UE is to monitor one or more SSSs associated with one or more monitoring capability IDs by transmitting to the UE a message that includes the one or more monitoring capability IDs. For example, the base station may perform this indication through a DCI message (such as DCI 2 -0 and scheduling DCI 1-0, DCI 1-1, scheduling DCI 1-2, scheduling DCI 0-0, scheduling DCI 0-1 and scheduling DCI 0-2 and the like).

Herein, one or more SSSs desired to be monitored or to be monitored determined based on monitoring capability IDs may be referred to as an SSS bundle (SSSB).

Referring to FIG. 3A and FIG. 3B again, for example, the base station may transmit to the UE DCI indicating monitoring capability ID 0, and then after receiving and decoding the DCI, the UE may switch to an SSSB consisting of SSS 0-6. For another example, the base station may transmit to the UE DCI indicating monitoring capabilities ID 0 and ID1, and then after receiving and decoding the DCI, the UE may switch to an SSSB consisting of SSS 0-7. For another example, the base station may transmit to the UE DCI indicating monitoring capability ID 5, and then after receiving and decoding the DCI, the UE may switch to an SSSB consisting of SSS 3 and 5-9. It should be noted that the switching may not occur immediately. For example, the UE may complete such switching after a predetermined period.

For example, the base station may autonomously determine that the switching of SSS is needed according to current resource conditions and/or communication scenarios, and the like. For example, in the case that current communication scenario may require low delay, the base station may indicate to the UE to switch to one or more SSSs configured for the monitoring capability(s) that supports more frequent monitoring, thereby detecting the PDCCH as early as possible. For another example, in the case that current communication scenario may require high reliability, the base station my indicate to the UE to switch to each blind detection occasion. The base station may also consider different requirements comprehensively and select a combination of multiple sets of SSS (s) respectively corresponding to different requirements. For example, in a URLLC scenario, reliability and low delay may need to be met at the same time. Therefore, the base station may transmit to the UE a monitoring capability ID associated with a set of SSS (s) that meet these two requirements at the same time, or DCI including monitoring capability IDs associated with two sets of SSS(s) that meet these two requirements respectively.

In addition, as shown in dashed box S212 of FIG. 2, the base station may receive from the UE one or more monitoring capability IDs indicating one or more SSSs to which the UE expects to switch, and determine the monitoring capability ID(s) to be notified to the UE based on the expected monitoring capability ID reported by the UE and resource conditions.

For example, in the case that resources are sufficient, the base station may indicate to the UE to monitor one or more SSSs corresponding to the monitoring capability ID(s) reported by the UE in accordance with the needs of the UE. That is, in this case, the base station may transmit to the UE the same monitoring capability ID(s) as the monitoring capability ID(s) reported by the UE. For another example, in the case that resources are relatively scarce or corresponding resources are already occupied, the base station may transmit to the UE one or more other monitoring capability IDs that are different from the monitoring capability ID(s) expected by the UE on the basis of considering the needs of the UE. In this case, such other monitoring capability IDs may indicate one or more suboptimal SSSs that meet the needs of the UE as closely as possible. In particular, this kind of other monitoring capability ID(s) may be monitoring capability IDs corresponding to one or more SSSs that the UE is currently monitoring, that is, the base station may indicate to the UE to continue monitoring on the current SSS (s) . For example, assuming that the UE is monitoring on an SSSB corresponding to monitoring capability 1 and expects to switch to monitoring capability 2, the base station may consider current resource conditions and the needs of the UE comprehensively and indicate to the UE to switch to an SSSB corresponding to monitoring capability 2, or switch to an SSSB corresponding to monitoring capability 3, or continue monitoring on the SSSB corresponding to monitoring capability 1.

The solution according to the first embodiment of the present disclosure may also be combined with the traditional solution of switching between two SSSGs for monitoring densities introduced above, thereby achieving more fine-grained SSS switching. In the case of this combined implementation, setting information about SSSG group (for example, which SSSs constitute which group of SSSG) may be included in the SSS configuration information, and the base station may transmit to the UE DCI including information indicating monitoring capability ID(s) (as explained above, in the case that the UE reported expected monitoring capability ID(s), the same as or different from the expected monitoring capability ID(s) reported by the UE) and information indicating the SSSG, thereby indicating to the UE to switch to one or more SSSs that overlap between the SSSB consisting of one or more SSSs associated with the monitoring capability ID(s) and the SSSG, to perform monitoring.

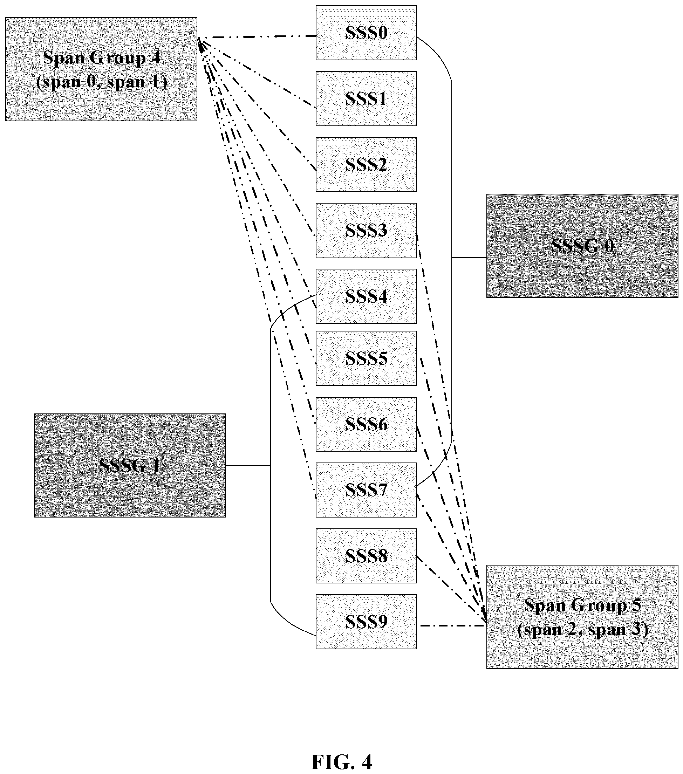

For example, as shown in FIG. 4, the base station may transmit to the UE DCI indicating monitoring capability ID 5 and SSSG 0. Then after receiving and decoding the DCI, the UE may switch to an intersection between an SSSB consisting of SSS 3, 5-9 and an SSSG consisting of SSS 0-7, that is, SSS 3, 5-7. This combined implementation solution may consider the following two dimensions at the same time: (1) the monitoring density uniformly set by the base station for various UEs (embodied as SSSGs with different monitoring occasion densities); and (2) the monitoring capability that each UE wants to apply, thereby enabling flexible and diverse SSS switching at a finer granularity to meet the needs of different UEs in different scenarios.

The solution according to the first embodiment of the present disclosure may also be combined with the solution of the second embodiment that will be described in detail below, and the detailed implementation of this combination will also be described in detail below.

Referring again to FIG. 2, the conceptual operational flow of the base station ends at S216.

It should be noted that the operating steps of the base station shown in FIG. 2 are only illustrative. In practice, operations of a base station may also include some additional or alternative steps. For example, as shown by S208 in the dashed box, optionally, the base station may also inform the UE whether to enable SSS switching based on the monitoring capability of the UE according to the first embodiment of the present disclosure. For example, the UE may be notified through an RRC signaling whether to enable SSS switching based on the monitoring capability of the UE. For example, without performing such a notification step, the base station and the UE may or may not enable such switching by default according to an agreement. In addition, such a notification step may not be performed at the step order shown in FIG. 2. For example, the notification can also be performed before or after S204, as long as the base station may let the UE know whether to enable such switching at the appropriate time. For another example, optionally, at S212, the base station may receive from the UE monitoring capability ID(s) indicating one or more SSSs to which the UE expects to switch. For example, the UE may report one or more monitoring capability IDs. As mentioned above, without performing S212, the base station will actively indicate to the UE to perform SSS switching.

### Structure and operation flow of a UE according to the first embodiment of the present disclosure

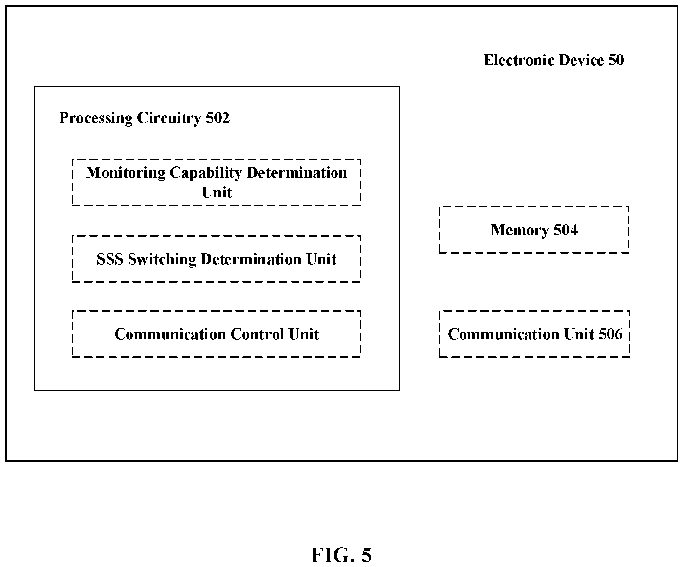

The exemplary structure and exemplary operations of a base station according to the present disclosure above have been described in detail above. Next, an exemplary structure and an exemplary operation flow of a terminal device according to the present disclosure will be described with reference to FIGS. 5-6.

First, a conceptual structure of an electronic device 50 for a terminal device/UE according to an embodiment of the present disclosure will be explained with reference to FIG. 5.

As shown in FIG. 5, the electronic device 50 may include a processing circuitry 502. The processing circuitry 502 may be configured to perform SSS switching based on monitoring capability of the electronic device 50 by: transmitting, to a base station, capability information indicating one or more monitoring capabilities supported by the electronic device 50 and monitoring capability IDs, each associated with each monitoring capability, such that the base station is able to associate one or more SSSs associated with each monitoring capability of the one or more monitoring capabilities with a monitoring capability ID associated with the monitoring capability; receiving, from the base station, SSS configuration information, wherein the SSS configuration information at least indicates a monitoring capability ID associated with each SSS; and receiving, from the base station, DCI comprising a first monitoring capability identifier, the DCI indicating one or more SSSs to be monitored to by the electronic device 50.

The processing circuitry 502 may be in the form of a general-purpose processor, or a special-purpose processing circuit, such as an ASIC. For example, the processing circuitry 502 can be constructed by a circuit (hardware) or a central processing device (such as, a central processing unit (CPU)). In addition, a program (software) for operating the circuit (hardware) or the central processing device may be carried on the processing circuitry 502. The program can be stored in a memory (such as arranged in the memory 504) or an external storage medium connected from the outside, and downloaded via a network (such as the Internet).

In one implementation, the processing circuitry 502 may comprise a monitoring capability determination unit that determines the monitoring capability of the electronic device 50. The monitoring capability of the UE has been described in detail above, which will not be repeated here.

The processing circuitry 502 may also include an SSS switching determination unit. The SSS switching determination unit, for example, may determine whether an energy saving event, a timer timeout, or another event that may trigger SSS switching has occurred, and in the affirmative case, determine that SSS switching needs to be performed, and determine to swich to one or more SSSs with which one or more monitoring capability IDs are associated.

The processing circuitry 502 may also include a communication control unit that controls communication with a base station (optionally via the communication unit 506) . The communication control unit may, for example, control transmitting, to the base station, capability information indicating one or more monitoring capabilities supported by the electronic device 50 and monitoring capability IDs, each associated with each monitoring capability; control receiving, from the base station, SSS configuration information at least indicating the association between each SSS and corresponding monitoring capability ID; optionally control transmitting, to the base station, a monitoring capability IE indicating associated with one or more SSSs to which the electronic device 50 expects to switch; and control receiving, from the base station, information indicating one or more SSSs to be monitored subsequently.

In addition, optionally, the electronic device 50 may also include a memory 504 and a communication unit 506 shown in dotted lines in the figure. In addition, the electronic device 50 may also include other components not shown, such as a radio frequency link, a baseband processing unit, a network interface, a processor, a controller, and the like. The processing circuitry 502 may be associated with the memory 504 and/or the communications unit 506. For example, the processing circuitry 502 may be connected to the memory 504 directly or indirectly (for example, other components may be connected in therebetween) to access data. For another example, the processing circuitry 502 may be connected to the communication unit 506 directly or indirectly to transmit radio signals via the communication unit 506 and to receive radio signals via the communication unit 506.

The memory 504 may store various information generated by the processing circuitry 502 (for example, monitoring capabilities supported by the electronic device 50 and corresponding monitoring capability IDs and SSS configuration information received from a base station, etc.), programs and data for operations of the electronic device 50, data to be transmitted by the communication unit 506, etc. The memory 504 is drawn with dashed lines as it may also be located within the processing circuitry 502 or external to the electronic device 50. The memory 504 may be a volatile memory and/or a non-volatile memory. For example, the memory 504 may include, but is not limited to, a random-access memory (RAM), a dynamic random-access memory (DRAM), a static random-access memory (SRAM), a read only memory (ROM), and a flash memory.

The communication unit 506 may be configured to communicate with a base station under the control of the processing circuitry 502 (e.g., communication control unit) . In one example, the communication unit 506 may be implemented as a transmitter or a transceiver, including communication components such as an antenna array and/or a radio frequency link.

Although the processing circuitry 502 is shown as being separate from the communication unit 506 in FIG. 5, the processing circuitry 502 may also be implemented to include the communication unit 506. Additionally, the processing circuitry 502 may also be implemented to include one or more other components in electronic device 50, or the processing circuitry 502 may be implemented as the electronic device 50 itself. In actual implementation, the processing circuitry 502 may be implemented as a chip (such as an integrated circuit module comprising a single wafer), a hardware component, or a complete product.

It should be noted that the above units are only logical modules divided according to specific functions they implement, and are not used to limit specific implementations, for example, they can be implemented in software, hardware, or a combination of software and hardware. In practical implementations, each of the above units may be implemented as an independent physical entity, or may also be implemented by a single entity (for example, a processor (CPU or DSP, etc.), integrated circuit, etc.). In addition, each of the above units is shown with dotted lines in the drawings to indicate that these units may not actually exist, and the operations/functions they realized may be realized by the processing circuitry itself.

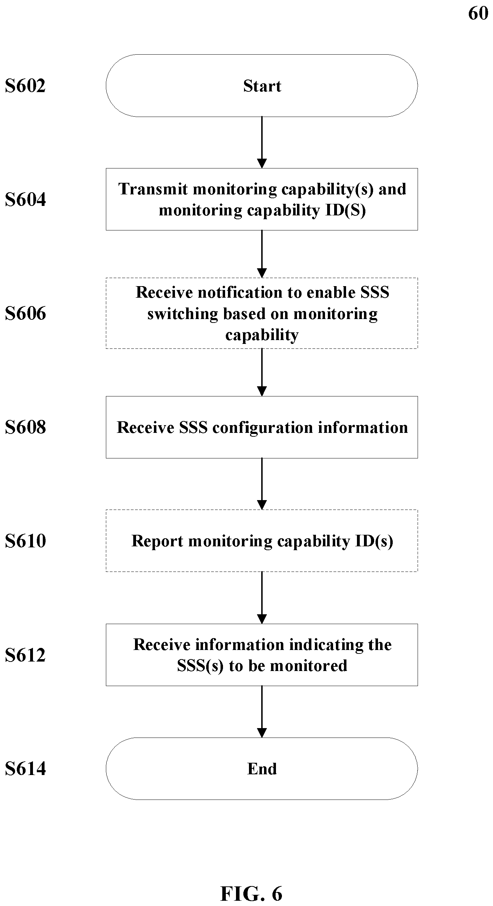

Next, a conceptual operation flow 60 of the electronic device 50 as the terminal device/UE side will be described with reference to FIG. 6.

The operation of the base station starts at S602.

At S604, the UE transmits, to a base station, capability information indicating one or more monitoring capabilities supported by the UE and monitoring capability IDs, each associated with each monitoring capability, such that the base station is able to associate one or more SSSs associated with each monitoring capability of the one or more monitoring capabilities with a monitoring capability ID associated with the monitoring capability. As detailed above, the monitoring capabilities supported by the UE may be one or more types of monitoring spans, one or more span groups each consisting of a portion or all of multiple types of monitoring spans, per-slot monitoring capability and per-multi-slot monitoring capability. The UE may report monitoring capability IDs, each associated with each monitoring capability together with the monitoring capabilities, such that the base station may know the correspondence between each monitoring capability received from the UE and corresponding monitoring capability ID.

At S608, the UE receives, from the base station, SSS configuration information, wherein, the SSS configuration information at least indicates a monitoring capability identifier associated with each SSS. According to the SSS configuration information, the UE may know what kind of SSS the base station has configured for it, such that it can determine information such as the CORESET associated with the SSS (s), time-frequency resource location of a candidate PDCCH in the SSS (s), the aggregation level and the like according to the SSS configuration information, so as to next, perform monitoring on corresponding SSS (s) for blind detection. For example, the UE may receive the SSS configuration information via an RRC signaling.

Next, optionally, at S610, the UE may transmit, to the base station, one or more monitoring capability IDs, which may indicate an SSSB consisting of one or more SSSs associated with the one or more monitoring capability IDs to which the UE expects to switch.

For example, the UE may report one or more monitoring capability IDs to indicate SSS(s) it expects to switch to due to an energy saving event, timer expiration, or other reasons. For example, the UE may detect that it is about to enter a power saving mode, and therefore the UE may expect to switch to one or more SSSs configured for the monitoring capability(s) that supports fewer number of times of monitoring, thereby reducing the number of times of monitoring as much as possible to reduce power consumption. For another example, the UE may detect that it is about to enter a scenario that requires low delay, and therefore, the UE may expect to switch to one or more SSSs configured for the monitoring capability(s) that supports more frequent monitoring, thereby detecting a PDCCH as early as possible. For another example, the UE may detect that it is about to enter a scenario that requires high reliability, and therefore, the UE may expect to switch to one or more SSSs that more resources are allocated for each blind detection occasion, so as to detect a PDCCH as reliably as possible. The UE may also consider different requirements comprehensively and select a combination of multiple sets of SSS(s) respectively corresponding to different requirements. For example, in a URLLC scenario, the UE may need to meet both reliability and low delay at the same time. Therefore, the UE may report to the base station a set of SSS(s) that meet both requirements at the same time, or two sets of SSS(s) that meet these two requirements separately, by reporting monitoring capability IDs.

For example, the UE may receive monitoring capability ID(s) via UE Assistant Information (UAI) or Media Access Control Control Element (MAC CE) or any other suitable signaling.

For example, the UE may report one or more monitoring capability IDs via UAI or MAC CE or any other suitable signaling.

Next, at S612, the UE may receive, from the base station, information indicating one or more SSSs to be monitored. In the case that S610 is not performed, the one or more SSSs to be monitored are determined by the base station independently. As explained above, the UE may receive from the base station a message including one or more monitoring capability IDs, such as a DCI message (such as DCI 2-0 and scheduling DCI 1-1, scheduling DCI 0-1 and scheduling DCI 0-2, etc.) and the like. In response to receiving such a message including monitoring capability IDs, the UE may (e.g., after a predetermined period) switch to one or more SSSs corresponding to the monitoring capability ID(s) for monitoring. According to a comprehensive consideration of the need of the UE and current resource allocation situation by the base station side, the one or more monitoring capability IDs received by the UE from the base station may be the same as or different from the expected monitoring capability IDs reported by the UE, and the received monitoring capability IDs may indicate one or more SSSs that the UE is currently monitoring (that is to say, in this case, the UE does not switch but continues to monitor on the current SSS(s)).

As explained in detail above, in the case that the solution according to the first embodiment of the present disclosure is implemented in conjunction with the traditional solution of switching between two SSSGs for monitoring frequencies, the UE may receive, from the base station, an DCI including information indicating the monitoring capability ID(s) and information indicating an SSSG. In response to receiving such DCI, the UE may switch to one or more SSSs that overlap between the SSSB consisting of the one or more SSSs associated with the monitoring capability ID(s) and the SSSG.

The operations on the UE side may also be combined with the second embodiment that will be described in detail below, and the detailed implementation of this combination will also be described in detail below.

Referring again to FIG. 6, the conceptual operation flow of the UE ends at S614.

It should be noted that the operation steps of the UE shown in FIG. 6 are only illustrative. In practice, operations of the UE may also include some additional or alternative steps. For example, S610 in the dashed box that has been illustrated. For another example, as shown in S606 in the dashed box, optionally, the UE may also receive a notification from the base station on whether to enable SSS switching based on the monitoring capability of the UE according to the first embodiment of the present disclosure. Such a notification may be received via an RRC signaling, for example. For example, without performing such a notification step, the base station and the UE may or may not enable such switching by default according to an agreement. In addition, such a notification step may not be performed at the step order shown in FIG. 6. For example, the notification can also be performed before S604, as long as the UE is able to know whether to enable such switching at the appropriate time.

### Interactions between base station and UE

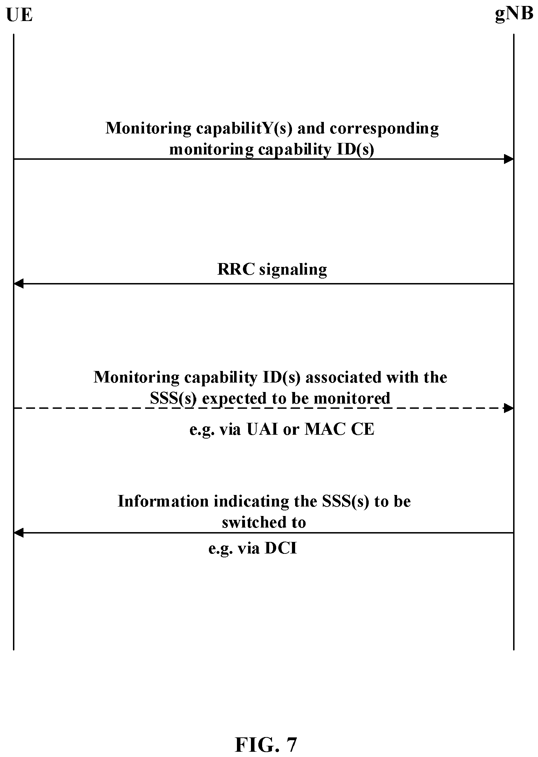

The schematic configurations and operation flows of a base station and a terminal device according to a first embodiment have been described above with reference to the accompanying drawings. Next, interactions between a base station and a terminal device according to the first embodiment will be described with reference to FIG. 7.

First, the UE may report one or more monitoring capabilities it supports and corresponding monitoring capability ID (s) to the base station by using any suitable message/signaling. In response to receiving the monitoring capability (s) of the UE and the corresponding monitoring capability ID(s), the base station configures respective one or more SSSs for each monitoring capability for the UE, and associates each SSS with the monitoring capability ID. Subsequently, the base station may transmit an RRC signaling to the UE to indicate the SSS configuration information. In particular, such SSS configuration information may indicate the correspondence between an SSS and a monitoring capability ID. Then, optionally, the UE may transmit, to the base station, a UAI or MAC CE or any other suitable signaling, which may contain one or more monitoring capability IDs associated with one or more SSSs to which the UE expects to switch. Autonomously or in response to receiving monitoring capability ID(s) expected by the UE, the base station may indicate to the UE one or more SSSs to be monitored, e.g., via a DCI message.

The first embodiment of the present disclosure has been described in detail above with reference to FIGS. 1-7. Compared with existing SSSGs that uniformly set sparse or dense monitoring for all types of UEs and perform switching between SSSGs, according to the first embodiment of the present disclosure, a solution of SSS switching based on monitoring capability of the UE may be advantageously set per UE, thereby achieving a more fine-grained, flexible and adjustable SSS switching solution. According to the first embodiment of the present disclosure, the UE can be enabled to monitor on the most appropriate SSS (s) based on the needs of the UE in different scenarios and according to monitoring capabilities that the UE can support. According to the first embodiment of the present disclosure, setting SSS switching solution for each UE may achieve optimal SSS settings for the entire network. For example, the minimum total power consumption of UEs in the entire network may be obtained. In addition, the first embodiment of the present disclosure makes less changes to existing standards and has strong robustness and scalability, such that it can be easily applied to various vertical application fields.

### Second embodiment

According to a second embodiment of the present disclosure, the base station may transmit, to the UE, DCI including information indicating one or more SSSs to be monitored, wherein, the DCI includes information indicating a DCI format or size, and the base station may configure a timer to the UE such that the UE only monitors, on the one or more SSS, PDCCHs complying with the DCI format or size indicated by the information in the DCI within a predetermined period specified by the timer, and restores to monitor all candidate PDCCHs corresponding to all DCI formats and sizes when the predetermined period specified by the timer expires.

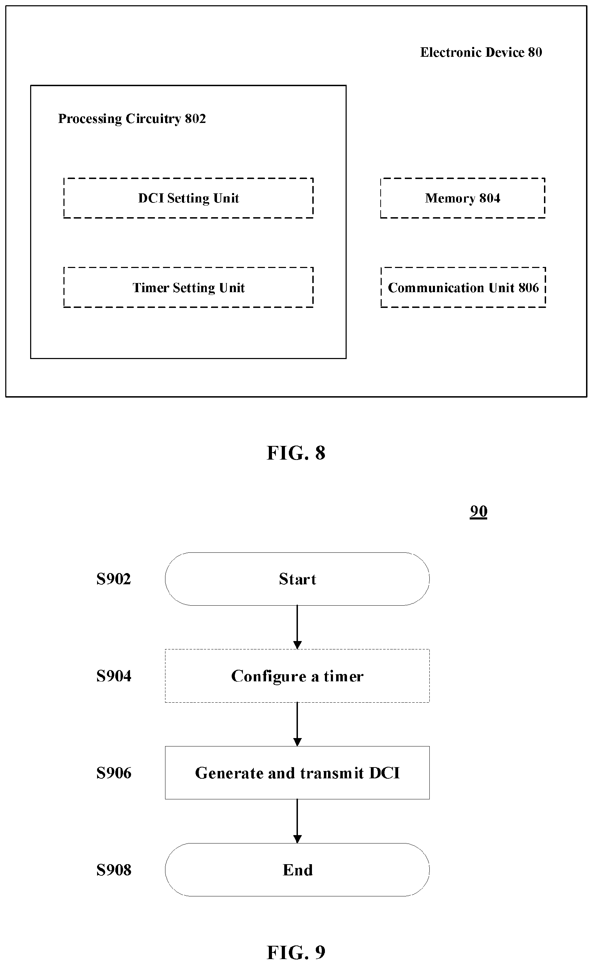

The second embodiment will be described in detail below with reference to FIGS. 8-12.

### Structure and operation flow of a control device according to the second embodiment of the present disclosure

The conceptual structure of an electronic device 80 for a control device/base station according to an embodiment of the present disclosure will be described below with reference to FIG. 8.

The overall structure of the electronic device 80 according to the second embodiment is similar to that of the electronic device 10 according to the first embodiment. As shown in FIG. 8, similar to the electronic device 10 according to the first embodiment shown in FIG. 1, the electronic device 80 may include a processing circuitry 802, and optionally include a memory 804 and a communication unit 806. The memory 804 and the communication unit 806 are similar to the memory 104 and the communication unit 106 described with reference to FIG. 1, which will not be repeated here. The implementation of the processing circuitry 802 is similar to that of the processing circuitry 102 described with reference to FIG. 1, that is, it may be in the form of a general-purpose processor or a special-purpose processing circuit, which will not be described further here.

The processing circuitry 802 of the electronic device 80 may be configured to transmit, to the UE, DCI including information indicating one or more SSSs to be monitored, wherein, the DCI includes information indicating a DCI format or size, and the processing circuitry 802 of the electronic device 80 may also be configured to configure a timer to the UE, such that the UE only monitors, on the one or more SSSs, PDCCHs complying with the DCI format or size indicated by the information in the DCI within a predetermined period specified by the timer, and restores to monitor all candidate PDCCHs corresponding to all DCI formats and sizes when the predetermined period specified by the timer expires.

In one implementation, the processing circuitry 802 may include a DCI setting unit. For example, the DCI setting unit may set content comprised in DCI to be transmitted to a UE, particularly information indicating a DCI format or size related to PDCCH(s) to be monitored. For example, such information indicating the DCI format or size may be information indicating whether the DCI format or size belongs to the same or different DCI format set as the format or size of the current DCI that has been decoded.

In one implementation, the processing circuitry 802 may also include a timer setting unit. For example, the timer setting unit may set one or more timers for a UE, particularly timer (s) associated with monitoring PDCCHs complying with DCI of a specific format or size.

Similar to the first embodiment, the division of various modules within the processing circuitry 802 is not necessary, and such module division is not necessarily to be fixed. For example, the processing circuitry 802 may also include other modules (for example, a communication control module, etc.), or it may not be divided into modules, but to implement functions of the electronic device 80 with the processing circuitry as a whole.

Operations implemented by the electronic device 80 will be described in detail below with reference to the conceptual operation flow of the control device/base station shown in FIG. 9.

The operation of the base station starts at S902.

At S906, the base station may generate and transmit to a UE DCI including information indicating one or more SSSs to be monitored, wherein the DCI includes information indicating a DCI format or size. In other words, the DCI transmitted by the base station to the UE indicating one or more SSSs to be monitored by the UE may further indicate to the UE to monitor next which format or size the candidate PDCCHs complies.

It should be noted that in the second embodiment, such DCI including information indicating one or more SSSs to be monitored by the UE and including information indicating the DCI format or size is not necessarily the DCI indicating SSS switching as described above with reference to the first embodiment. In other words, the one or more SSSs indicated in such DCI in the second embodiment may be the same SSS(s) as the one or more SSSs that the UE is monitoring (that is, the case that no switching is indicated), or may be the SSS(s) different from the one or more SSSs that the UE is monitoring (that is, the case that switching is indicated). For example, such DCI in the second embodiment may include information indicating an SSSG (e.g., the same or a different SSSG than the one currently monitoring), and in this case, the one or more SSSs to be monitored are one or more SSSs consisting the SSSG. As another example, such DCI in the second embodiment may include information indicating the monitoring capability ID(s) according to the first embodiment (for example, monitoring capability ID(s) that is the same as or different from the monitoring capability ID(s) corresponding to one or more SSSs currently being monitored), and in this case, the one or more SSSs to be monitored are the one or more SSSs associated with the monitoring capability ID(s).

Generally, when performing blind detection, the UE needs to try to decode all candidate PDCCHs on one or more SSSs that the base station indicates to monitor. These candidate PDCCHs may correspond to different DCI formats or sizes. However, the present disclosure notes that in some cases, control information to be transmitted on a downlink may be concentrated on some specific formats or sizes of DCIs, and therefore, the UE may be expected to perform monitoring only on candidate PDCCHs complying with these specific formats or sizes, instead of monitoring all candidate PDCCHs. Therefore, it is possible to consider limiting the number of candidate PDCCHs to be monitored by limiting the format or size of the DCI, so as to achieve adaptive adjustment of the times of monitoring to further reduce power consumption.

For example, in an Extended Reality (XR) scenario with a large amount of data traffic in both uplink and downlink, when entering a data scheduling phase, due to energy saving requirements, a base station and a UE need to complete intensive data traffic interaction in uplink and downlink in a relatively concentrated period of time. The traffic involved in this interaction is relatively single (i.e., the data scheduling traffic implemented by scheduling DCI), and uplink and downlink scheduling may be understood as being performed almost simultaneously. The base station knows both the downlink scheduling and the uplink scheduling, so the base station may determine that whether a downlink scheduling to be transmitted after transmitting the downlink scheduling belongs to the same or different DCI format set as the uplink scheduling just transmitted. Therefore, when transmitting a downlink scheduling, the base station may indicate to the UE a DCI format or size of an uplink scheduling performed subsequently (for example, by indicating that the subsequent uplink scheduling belongs to the same or different format set as the downlink scheduling), thereby monitoring only candidate PDCCHs complying with the DCI format or size of uplink scheduling, thereby reducing the number of times of blind detections and in turn meeting the needs for fast XR data scheduling and energy saving.

In one implementation, the information indicating a DCI format or size to be monitored subsequently may be information indicating whether the DCI format or size belongs to the same or a different DCI format set from the format or size of the current DCI (i.e., currently received DCI) that has been decoded. In the case of belonging to the same DCI format set, the information indicates to the UE to only monitor, on the one or more SSSs indicated in the currently received DCI, PDCCHs complying with the DCI format set to which the current DCI that has been decoded belongs within a predetermined period specified by a timer; and in the case of belonging to a different DCI format set, the information indicates to the UE to only monitor, on the one or more SSSs, PDCCHs not complying with the DCI format set to which the current DCI that has been decoded belongs within the predetermined period specified by the timer. Here, the DCI format set may be a set of one or several DCI formats complying with relevant standards (e.g., 3GPP standards) . For example, the DCI format set may include only a single DCI format, or may include multiple DCI formats (such as (DCI 0-2 and DCI 1-2) and (DCI 0-0 and DCI 1-0), etc.).

For example, in this implementation, 1-bit or 2-bit signaling may be added to the DCI indicating one or more SSSs to be monitored, or 1-bit or 2-bit information field in the DCI may be reused. For example, when the signaling in the DCI is 1, the UE may be indicated to only monitor candidate PDCCHs complying with the DCI format set to which the current DCI that has been decoded belongs within a predetermined period. In particular, when the DCI format set indicated by the signaling includes multiple DCI types, the signaling indicates that the UE next will only monitor candidate PDCCHs complying with the multiple DCI types comprised in the DCI format set to which the current DCI that has been decoded belongs within a predetermined period. Similarly, when the signaling in the DCI is 0, the UE may be indicated to only monitor PDCCHs not complying with the DCI format set to which the format or size of the current DCI that has been decoded belongs within a predetermined period. In particular, when the DCI format set indicated by the signaling includes multiple DCI types, the signaling indicates that the UE next will only monitor candidate PDCCHs not complying with any DCI type comprised in the DCI format set to which the current DCI that has been decoded belongs within a predetermined period.

According to the second embodiment, the information indicating the format or size of the DCI is not limited to the above information indicating whether the DCI format or size belongs to the same or different DCI format set from the format or size of the current DCI that has been decoded. The base station may indicate to the UE the format or size of the DCI according to which the UE is to monitor by using any suitable manner. For example, the base station may also directly transmit one or more specific DCI formats to be monitored to the UE.

According to the second embodiment, the base station may configure a timer to the UE at any appropriate time (for example, at S904 in the dashed box of FIG. 9), such that the UE only monitors candidate PDCCHs complying with the DCI format or size indicated by the above information in the above DCI within a predetermined period specified by the timer, and restores to monitor all candidate PDCCHs corresponding to all DCI formats and sizes when the predetermined period specified by the timer expires.

For example, when a base station establishes communication with a UE, the base station may configure a general timer or multiple dedicated timers for the UE. Subsequently, during blind detection configuration, for example, as shown in S904, before transmitting the DCI indicating one or more SSSs to be monitored, or simultaneously with transmitting the DCI indicating one or more SSSs to be monitored, the UE is indicated which timer is to be used to specify the period for monitoring candidate PDCCHs complying with a specific DCI format or size. Of course, the present disclosure is not limited to this, and the base station may configure a timer for a UE in any appropriate manner, as long as the UE can know the period for monitoring candidate PDCCHs complying with a specific DCI format or size.

The conceptual operation flow of the base station ends at S908.

It should be noted that the operating steps of the base station shown in FIG. 9 are only illustrative. In practice, operations of a base station may also include some additional or alternative steps. For example, the second embodiment may also be implemented in combination with the first embodiment described above. The implementation of this combination will be described in detail below.

In the case that the first embodiment is implemented in combination with the second embodiment, when performing SSS switching based on the monitoring capability of a UE, the DCI indicating one or more SSSs to be monitored to the UE may further include information indicating a DCI format or size, and configure a timer to the UE, such that the UE only monitors, on the one or more SSSs to be monitored, candidate PDCCHs complying with the DCI format or size indicated by the information in the DCI within a predetermined period specified by the timer, and restores to monitor all candidate PDCCHs corresponding to all DCI formats and sizes when the predetermined period specified by the timer expires.

Specifically, as described in detail in the first embodiment, the base station may receive, from the UE, capability information indicating one or more monitoring capabilities supported by the UE and monitoring capability IDs, each associated with each monitoring capability; associate one or more SSSs associated with each of the one or more monitoring capabilities with a monitoring capability ID associated with the monitoring capability; transmit, to the UE, SSS configuration information, wherein, the SSS configuration information at least indicates a monitoring capability ID associated with each SSS; and transmit, to the UE, DCI comprising a first monitoring capability ID, so as to indicate the one or more SSSs to be monitored by the UE (e.g., the one or more SSSs associated with the first monitoring capability ID). And as described in detail in the second embodiment, the DCI further includes information indicating a DCI format or size and the base station also configures a timer for the UE, such that after receiving the DCI, the UE only monitors, on the one or more SSSs to be monitored, candidate PDCCHs complying with the DCI format or size indicated by the information in the DCI within a predetermined period specified by the timer, and restores to monitor all candidate PDCCHs corresponding to all DCI formats and sizes when the predetermined period specified by the timer expires.

It should be noted that the specific implementation details of the first embodiment and the specific implementation details of the second embodiment can be combined to any extent. For example, the DCI transmitted by the base station to the UE indicating one or more SSSs to be monitored may include information indicating monitoring capability ID(s), information indicating an SSSGs, and information indicating DCI format(s) or size(s). In this case, after receiving the DCI, the UE only monitors, on the one or more SSSs that overlap between one or more SSSs associated with the monitoring capability ID(s) and the SSSGs, candidate PDCCHs complying with the DCI format or size indicated by the information in the DCI within a predetermined period, and restores to monitor all candidate PDCCHs corresponding to all DCI formats and sizes when the predetermined period specified by the timer expires.

It should be noted that the base station does not necessarily have to transmit information specifying the DCI format or size to be monitored at the timing when it is necessary to indicate to the UE that SSS switching is to be performed. In practice, the base station may transmit to the UE information indicating the DCI format or size to be monitored at a timing when it determines that candidate PDCCHs may be reduced by limiting the DCI format or size. In this case, for example, the base station may transmit DCI to the UE that includes at least information: monitoring capability ID(s) corresponding to one or more SSSs on which the UE is currently monitoring and/or information indicating an SSSG, and a specific DCI format or size at which the UE is to be monitored.

### Structure and operation flow of a terminal device according to the second embodiment of the present disclosure

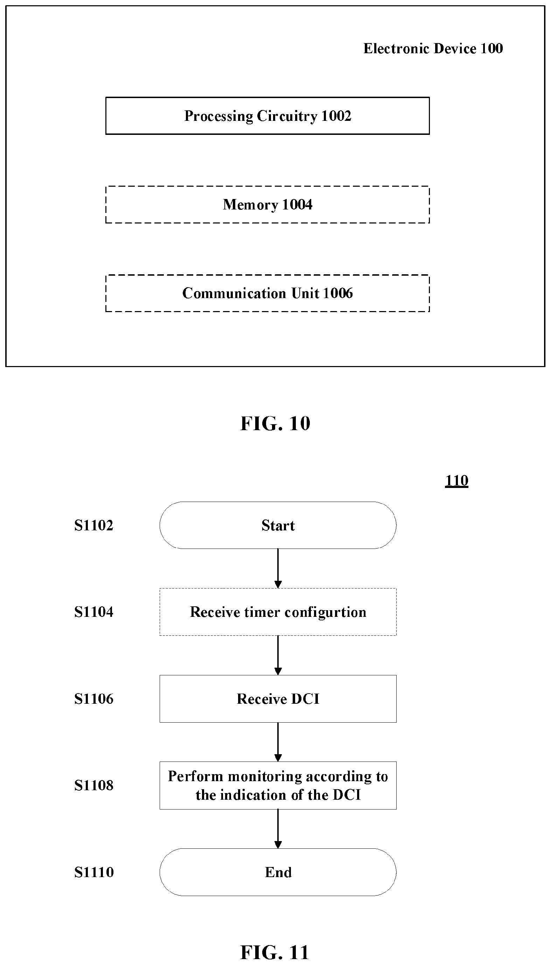

The exemplary structure and exemplary operations of a control device/base station according to the second embodiment of the present disclosure have been described in detail above. Next, an exemplary structure and an exemplary operation flow of a terminal device/UE according to the present disclosure will be described with reference to FIGS. 10-11.

First, a conceptual structure of an electronic device 100 for a terminal device/UE according to an embodiment of the present disclosure will be explained with reference to FIG. 10.

The overall structure of the electronic device 100 according to the second embodiment is similar to that of the electronic device 50 according to the first embodiment. As shown in FIG. 10, similar to the electronic device 50 according to the first embodiment shown in FIG. 5, the electronic device 100 may include a processing circuitry 1002 and optionally a memory 1002 and a communication unit 1004. The memory 1002 and the communication unit 1004 are similar to the memory 504 and the communication unit 506 described with reference to FIG. 5, which will not be repeated here. The implementation of the processing circuitry 1002 is similar to that of the processing circuitry 502 described with reference to FIG. 5, that is, it may be in the form of a general-purpose processor or a special-purpose processing circuit, which will not be described further here.

The processing circuitry 1002 of the electronic device 100 may be configured to receive, from a base station, DCI including information indicating one or more SSSs to to be monitored, the DCI including information indicating a DCI format or size. The processing circuitry 1002 of the electronic device 100 may further be configured to process a timer configured by the base station, and control to only monitor, on one or more SSSs indicated by the DCI, candidate PDCCHs complying with the DCI format or size indicated by the information in the DCI within a predetermined period specified by the timer, and restore to monitor all candidate PDCCHs corresponding to all DCI formats and sizes when the predetermined period specified by the timer expires.

The processing circuitry 1002 may also be configured to perform further functions, and optionally may be divided into different modules to implement corresponding functions. For example, when implemented in conjunction with the first embodiment, the processing circuitry 1002 may also control to transmit monitoring capability(s) and monitoring capability ID(s) of the electronic device 100 to the base station, and optionally determine that switching is expected, and control to transmit, to the base station, the monitoring capability ID(s) associated with one or more SSSs to which it expects to switch, etc.

Next, a conceptual operation flow 110 of the terminal device/UE according to the second embodiment will be explained with reference to FIG. 11.

The operation of the UE starts at S1102.

At S1106, the UE receives, from a base station, DCI including information indicating one or more SSSs to be monitored and information indicating a DCI format or size. For example, as explained above with reference to the operations of the base station, the information indicating the DCI format or size may be information indicating that the DCI format or size belongs to the same or different DCI format set from the current DCI (i.e., the currently received DCI) that has been decoded.

In response to receiving the DCI, at S1108, the UE performs monitoring according to the indication of the DCI. Specifically, the UE may only monitor, on one or more SSSs indicated by the DCI, candidate PDCCHs complying with the DCI format or size indicated by the DCI within a predetermined period, and restore to monitor all candidate PDCCHs corresponding to all DCI formats and sizes after the predetermined period expires. For example, in the case that the DCI includes information indicating whether the DCI format or size belongs to the same or different DCI format set from the format or size of the DCI that has been decoded, in response to the information indicating the same, the UE may only monitor, on the one or more SSSs indicated in the currently received DCI, PDCCHs complying with the DCI format set to which the current DCI that has been decoded belongs within a predetermined period; and in response to the information indicating different, the UE may only monitor, on the one or more SSSs, PDCCHs not complying with the DCI format set to which the current DCI that has been decoded belongs within a predetermined period.

Here, the above "predetermined period" may be determined based on a timer configured by a base station to a UE. For example, the UE may receive a timer configuration from the base station at any appropriate time (e.g., at S1104 in the dashed box of FIG. 11), so as to determine a time period for monitoring candidate PDCCHs complying with DCI of a specific format or size.

The operation flow of the UE ends at S1110.

It should be noted that the operation steps of the UE shown in FIG. 11 are only illustrative. In practice, operations of the UE may also include some additional or alternative steps. For example, in the case that the first embodiment and the second embodiment described in detail above are implemented in combination, the UE may also include operations such as transmitting monitoring capability (s) and monitoring capability ID(s) to the base station, receiving SSS configuration information, and reporting expected monitoring capability ID(s), etc.

### Interactions between a base station and a UE

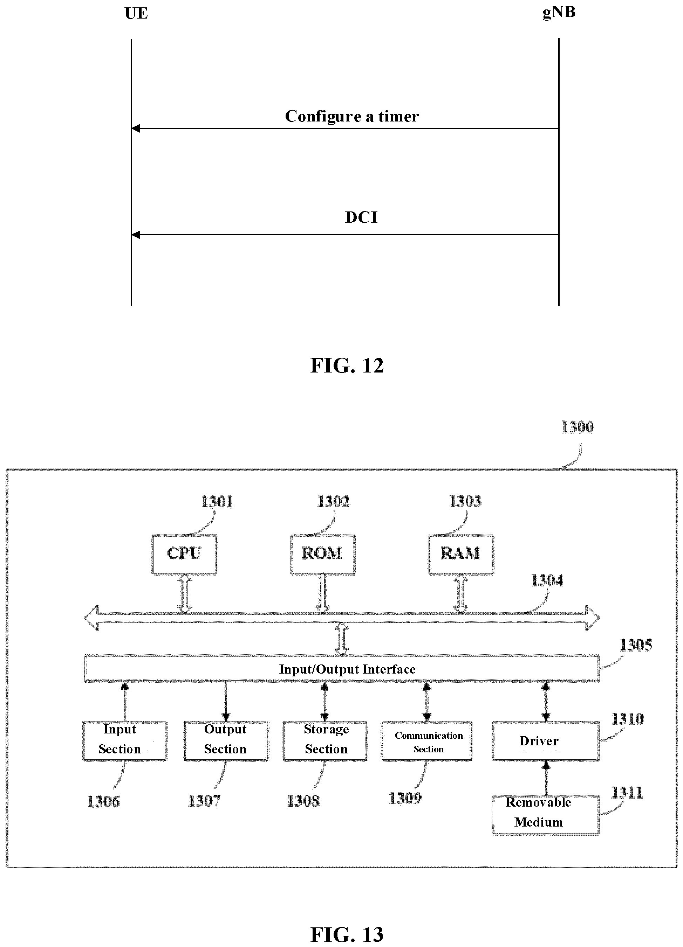

The schematic configurations and operation flows of a base station and a terminal device according to a second embodiment have been described above with reference to the accompanying drawings. Next, interactions between a UE and a base station according to the second embodiment will be briefly described below with reference to FIG. 12.

As shown in FIG. 12, first, the base station may configure a timer to the UE. Here, configuring a timer may be indicating to the UE to use a specific timer among previously (for example, when establishing communication) configured timers, so that the UE knows which timer to use to determine the time period for monitoring candidate PDCCHs complying with DCI of a specific format or size.

Subsequently, the base station may transmit DCI to the UE. The DCI may include information indicating one or more SSSs to be monitored and information indicating a DCI format or size, such that the UE only monitors, on the one or more SSSs indicated by the DCI, candidate PDCCHs complying with the DCI format or size indicated by the DCI within a predetermined period specified by a timer, and restores to monitor all candidate PDCCHs corresponding to all DCI formats and sizes after the predetermined period expires.

The second embodiment of the present disclosure has been described in detail above with reference to FIGS. 8-12. According to the second embodiment of the present disclosure, it is advantageous to limit the number of candidate PDCCHs to be monitored by limiting the DCI format or size, thereby achieving adaptive adjustment of the number of times of monitoring to further reduce power consumption. In addition, the second embodiment of the present disclosure makes less changes to existing standards and is easy to implement.

In particular, in the case that the first embodiment and the second embodiment are implemented in combination, for one thing, SSS switching for a UE based on the monitoring capability of the UE can be provided, and for another thing, the number of candidate PDCCHs to be monitored can be limited, Therefore, the power consumption can be reduced as much as possible on the basis of enabling the UE to monitor on the most appropriate SSSs according to the monitoring capability (s) that the UE can support.

It should be understood that machine-executable instructions in a machine-readable storage medium or program product according to embodiments of the present disclosure can be configured to perform operations corresponding to the device and method embodiments described above. When referring to the above device and method embodiments, the embodiments of the machine-readable storage medium or program product will be apparent to those skilled in the art, and therefore description thereof will not be repeated. Machine-readable storage media and program products for carrying or including the above machine-executable instructions also fall within the scope of the present disclosure . Such storage media may include, but are not limited to, floppy disks, optical disks, magneto-optical disks, memory cards, memory sticks, and the like.

In addition, it should be understood that the series of processes and devices described above may also be implemented by software and/or firmware. In the case of be implemented by software and/or firmware, a program constituting the software is installed from a storage medium or a network to a computer having a dedicated hardware structure, for example, a general-purpose personal computer 1300 shown in FIG. 13, which, when installed with various programs, can perform various functions and the like. FIG. 13 is a block diagram showing an example structure of a personal computer as an information processing device that can be employed in an embodiment of the present disclosure. In one example, the personal computer may correspond to the above exemplary terminal device according to the present disclosure.

In FIG. 13, a central processing unit (CPU) 1301 executes various processes according to a program stored in a read only memory (ROM) 1302 or a program loaded from a storage section 1308 to a random-access memory (RAM) 1303. In the RAM 1303, data required when the CPU 1301 executes various processes and the like is also stored as necessary.

The CPU 1301, ROM 1302, and RAM 1303 are connected to each other via a bus 1304. The input/output interface 1305 is also connected to the bus 1304.

The following components are connected to the input/output interface 1305: an input section 1306 including a keyboard, a mouse, etc.; an output section 1307 including a display such as a cathode ray tube (CRT), a liquid crystal display (LCD), etc., and a speaker, etc.; a storage section 1308, including a hard disk, etc.; and a communication section 1309, including a network interface card such as a LAN card, a modem, and the like. The communication section 1309 performs communication processing via a network such as the Internet.

A driver 1310 is also connected to the input/output interface 1305 as needed. A removable medium 1311 such as a magnetic disk, an optical disk, a magneto-optical disk, a semiconductor memory, and the like is mounted on the drive 1310 as needed, so that a computer program read therefrom is installed into the storage section 1308 as needed.

In the case that the series of processing described above is implemented by software, a program constituting the software is installed from a network such as the Internet or a storage medium such as a removable medium 1311.

Those skilled in the art should understand that such a storage medium is not limited to the removable medium 1311 shown in FIG. 13 in which a program is stored and distributed separately from the device to provide the program to the user. Examples of the removable medium 1311 include a magnetic disk (including a floppy disk (registered trademark)), an optical disk (including a compact disk read-only memory (CD-ROM) and digital versatile disk (DVD)), a magneto-optical disk (including a mini disc (MD) (registered trademark)) and a semiconductor memory. Alternatively, the storage medium may be the ROM 1302, a hard disk contained in the storage section 1308, or the like, in which programs are stored and distributed to users together with devices containing them.

The techniques of the present disclosure can be applied to various products.

For example, the electronic device 10 and the electronic device 80 according to an embodiment of the present disclosure may be implemented as or included in various control devices/base stations, while the methods shown in FIGS. 6 and 9 may also be implemented by various control devices/base stations. For example, the electronic device 50 and the electronic device 100 according to the embodiments of the present disclosure may be implemented as or included in various terminal devices/user devices, while the methods shown in FIGS. 8 and 11 may also be implemented by various terminal devices/user devices.

For example, the control device/base station mentioned in this disclosure can be implemented as any type of base station, e.g., an evolved Node B (gNB), such as a macro gNB and a small gNB. The small gNB may be a gNB covering a cell smaller than a macro cell, such as a pico gNB, a micro gNB, and a home (femto) gNB. Alternatively, the base station may be implemented as any other type of base station, such as a NodeB and a Base Transceiver Station (BTS) . The base station may include: a body (also referred to as a base station device) configured to control wireless communication; and one or more Remote Radio Heads (RRHs) disposed at a different place from the body. In addition, various types of terminals to be described below can each operate as a base station by temporarily or semi-permanently performing base station functions.

For example, the terminal device mentioned in this disclosure, also referred to as a user device in some examples, can be implemented as a mobile terminal (such as a smart phone, a tablet personal computer (PC), a notebook PC, a portable game terminal, a portable/dongle type mobile router and a digital camera) or a vehicle-mounted terminal (such as a car navigation device) . The user device may also be implemented as a terminal performing machine-to-machine (M2M) communication (also referred to as a machine type communication (MTC) terminal). In addition, the user device may be a wireless communication module (such as an integrated circuit module including a single wafer) mounted on each of the above terminals.

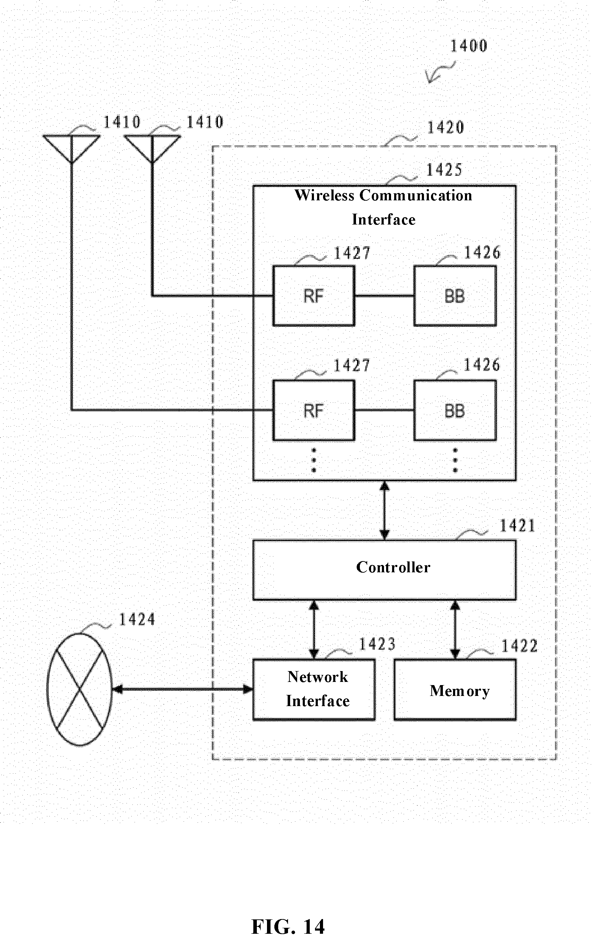

Examples according to the present disclosure will be described below with reference to FIGS. 14 to 17.

### [Examples about base stations]

It should be understood that the term base station in this disclosure has its full breadth of ordinary meaning and includes at least a wireless communication station used as part of a wireless communication system or a radio system to facilitate communication. Examples of base stations may be, for example but not limited to: a base station may be one or both of a base transceiver station (BTS) and a base station controller (BSC) in a GSM system, may be one or both of a radio network controller (RNC) and Node B in a WCDMA system, may be an eNB in a LTE and LTE-Advanced system, may be an gNB, eLTE eNB, etc. appearing in a 5G communication system, or may be a corresponding network node in a future communication system. Part of the functions in the base stations of the present disclosure may also be implemented as an entity that has control functions for communication in D2D, M2M and V2V communication scenarios, or as an entity that plays a spectrum coordination role in cognitive radio communication scenarios.

### First Example

FIG. 14 is a block diagram showing a first example of a schematic configuration of a gNB to which the technology of the present disclosure can be applied. The gNB 1400 includes multiple antennas 1410 and a base station device 1420. The base station device 1420 and each antenna 1410 may be connected to each other via an RF cable. In one implementation, the gNB 1400 (or the base station device 1420) here may correspond to the above electronic device 10 and/or the electronic device 80.

Each of the antennas 1410 includes a single or multiple antenna elements (such as multiple antenna elements included in a Multiple Input Multiple Output (MIMO) antenna), and is used by the base station device 1420 to transmit and receive wireless signals. As shown in FIG. 14, the gNB 1400 may include multiple antennas 1410. For example, the multiple antennas 1410 may be compatible with multiple frequency bands used by the gNB 1400.

The base station device 1420 includes a controller 1421, a memory 1422, a network interface 1423 and a wireless communication interface 1425.

The controller 1421 may be, for example, a CPU or a DSP, and operates various functions of a higher layer of the base station device 1420. For example, the controller 1421 generates a data packet according to data in a signal processed by the wireless communication interface 1425 and transfers the generated packet via the network interface 1423. The controller 1421 may bundle data from a plurality of baseband processors to generate a bundled packet, and transfer the generated bundled packet. The controller 1421 may have logic functions to perform controls such as radio resource control, radio bearer control, mobility management, admission control and scheduling. These controls can be performed in conjunction with nearby gNBs or core network nodes. The memory 1422 includes RAM and ROM, and stores programs executed by the controller 1421 and various types of control data (such as a terminal list, transmission power data, and scheduling data).

The network interface 1423 is a communication interface for connecting the base station device 1420 to the core network 1424. The controller 1421 may communicate with a core network node or further gNB via the network interface 1423. In this case, the gNB 1400 and core network nodes or other gNBs can be connected to each other through logical interfaces (such as S1 interface and X2 interface) . The network interface 1423 may also be a wired communication interface or a wireless communication interface for wireless backhaul. If the network interface 1423 is a wireless communication interface, the network interface 1923 may use a higher frequency band for wireless communication than that used by the wireless communication interface 1425.

The wireless communication interface 1425 supports any cellular communication scheme (such as Long-Term Evolution (LTE) and LTE-Advanced), and provides a wireless connection to a terminal located in a cell of the gNB 1400 via the antenna 1410. The wireless communication interface 1425 may generally include, for example, a baseband (BB) processor 1426 and an RF circuit 1427. The BB processor 1426 may perform, for example, encoding/decoding, modulation/demodulation, and multiplexing/demultiplexing, and performs various types of signal processing in layers (for example, L1, Medium Access Control (MAC), Radio Link Control (RLC), and Packet Data Convergence Protocol (PDCP)). In place of the controller 1421, the BB processor 1426 may have part or all of the logic functions described above. The BB processor 1426 may be a memory storing a communication control program, or a module including a processor and related circuits configured to execute the program. Updating the program may cause the functionality of the BB processor 1426 to change. The module may be a card or a blade inserted into a slot of the base station device 1420. Alternatively, the module can also be a chip mounted on a card or blade. Meanwhile, the RF circuit 1427 may include, for example, a mixer, a filter, and an amplifier, and transmit and receive wireless signals via the antenna 1410. Although FIG. 14 illustrates an example in which one RF circuit 1427 is connected to one antenna 1410, the present disclosure is not limited to this, instead, one RF circuit 1427 may be connected to multiple antennas 1410 at the same time.

As shown in FIG. 14, the wireless communication interface 1425 may include multiple BB processors 1426. For example, the multiple BB processors 1426 may be compatible with multiple frequency bands used by the gNB 1400. As shown in FIG. 14, the wireless communication interface 1425 may include multiple RF circuits 1427. For example, the multiple RF circuits 1427 may be compatible with multiple antenna elements . Although FIG. 14 illustrates an example in which the wireless communication interface 1425 includes multiple BB processors 1426 and multiple RF circuits 1427, the wireless communication interface 1425 may also include a single BB processor 1426 or a single RF circuit 1427.

### Second Example

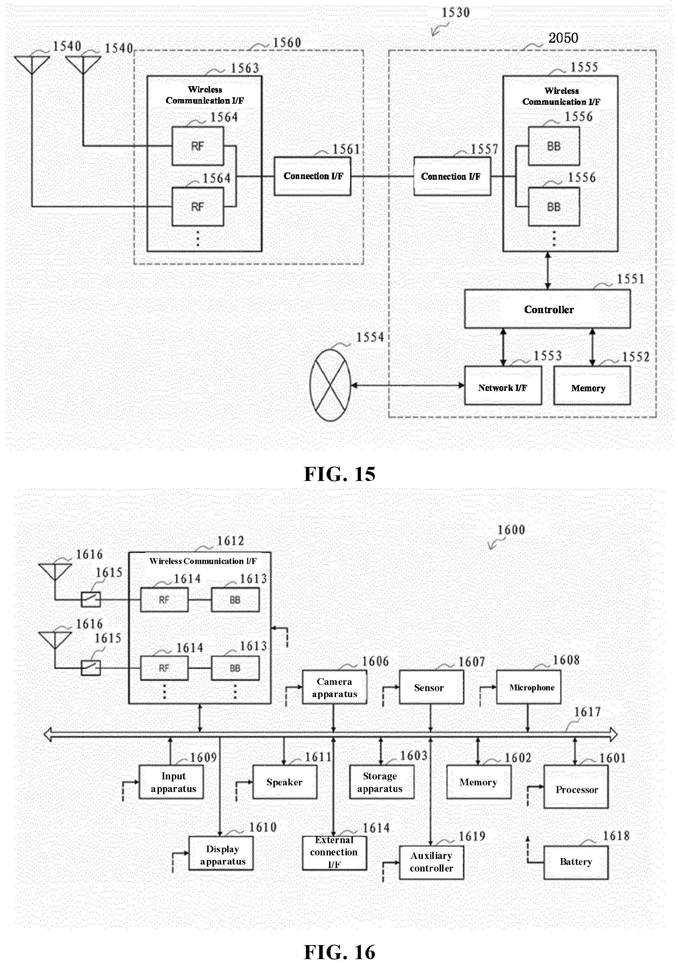

FIG. 15 is a block diagram showing a second example of a schematic configuration of a gNB to which the technology of the present disclosure can be applied. The gNB 1530 includes multiple antennas 1540, a base station device 1550 and a RRH 1560. The RRH 1560 and each antenna 1540 may be connected to each other via RF cables. The base station device 1550 and the RRH 1560 can be connected to each other via a high-speed line such as an optical fiber cable. In one implementation, the gNB 1530 (or the base station device 1550) here may correspond to the above electronic device 50 and/or 100.

Each of the antennas 1540 includes a single or multiple antenna elements (such as multiple antenna elements included in a MIMO antenna), and is used by the RRH 1560 to transmit and receive wireless signals. As shown in FIG. 15, the gNB 1530 may include multiple antennas 1540. For example, the multiple antennas 1540 may be compatible with multiple frequency bands used by the gNB 1530.

The base station device 1550 includes a controller 1551, a memory 1552, a network interface 1553, a wireless communication interface 1555 and a connection interface 1557. The controller 1551, the memory 1552, and the network interface 1553 are the same as the controller 1421, the memory 1422, and the network interface 1423 described with reference to FIG. 14.

The wireless communication interface 1555 supports any cellular communication scheme (such as LTE and LTE-Advanced), and provides wireless communication to terminals located in a sector corresponding to the RRH 1560 via the RRH 1560 and the antenna 1540. The wireless communication interface 1555 may generally include, for example, a BB processor 1556. The BB processor 1556 is the same as the BB processor 1426 described with reference to FIG. 14, except that the BB processor 1556 is connected to the RF circuit 1564 of the RRH 1560 via the connection interface 1557. As shown in FIG. 15, the wireless communication interface 1555 may include multiple BB processors 1556. For example, the multiple BB processors 1556 may be compatible with multiple frequency bands used by the gNB 1530. Although FIG. 15 illustrates an example in which the wireless communication interface 1555 includes multiple BB processors 1556, the wireless communication interface 1555 may also include a single BB processor 1556.

The connection interface 1557 is an interface for connecting the base station device 1550 (the wireless communication interface 1555) to the RRH 1560. The connection interface 1557 may also be a communication module for communication in the above high-speed line connecting the base station device 1550 (the wireless communication interface 1555) to the RRH 1560.

The RRH 1560 includes a connection interface 1561 and a wireless communication interface 1563.

The connection interface 1561 is an interface for connecting the RRH 1560 (the wireless communication interface 1563) to the base station device 1550. The connection interface 1561 may also be a communication module for communication in the above high-speed line.

The wireless communication interface 1563 transmits and receives wireless signals via the antenna 1540. The wireless communication interface 1563 may generally include an RF circuit 1564, for example. The RF circuit 1564 may include, for example, a mixer, a filter, and an amplifier, and transmits and receives wireless signals via the antenna 1540. Although FIG. 15 illustrates an example in which one RF circuit 1564 is connected to one antenna 1540, the present disclosure is not limited to this, instead, one RF circuit 1564 may be connected to multiple antennas 1540 at the same time.

As shown in FIG. 15, the wireless communication interface 1563 may include multiple RF circuits 1564. For example, the multiple RF circuits 1564 may support multiple antenna elements. Although FIG. 15 illustrates an example in which the wireless communication interface 1563 includes multiple RF circuits 1564, the wireless communication interface 1563 may also include a single RF circuit 2064.

### [Example about user device]

### First Example

FIG. 16 is a block diagram showing an example of a schematic configuration of a smart phone 1600 to which the technology of the present disclosure can be applied. The smart phone 1600 includes a processor 1601, a memory 1602, a storage apparatus 1603, an external connection interface 1604, a camera apparatus 1606, a sensor 1607, a microphone 1608, an input apparatus 1609, a display apparatus 1610, a speaker 1611, a wireless communication interface 1612, one or more antenna switches 1615, one or more antennas 1616, a bus 1617, a battery 1618, and an auxiliary controller 1619. In one implementation, the smart phone 1600 (or the processor 1601) here may correspond to the above electronic device 50 and/or electronic device 100.

The processor 1601 may be, for example, a CPU or a system on chip (SoC), and controls functions of an application layer and further layers of the smart phone 1600. The memory 1602 includes RAM and ROM, and stores data and programs executed by the processor 1601. The storage apparatus 1603 may include a storage medium such as a semiconductor memory and a hard disk. The external connection interface 1604 is an interface for connecting an external apparatus (such as a memory card and a universal serial bus (USB) apparatus) to the smart phone 1600.

The camera apparatus 1606 includes an image sensor (such as a charge coupled device (CCD) and a complementary metal oxide semiconductor (CMOS)), and generates captured images. The sensor 1607 may include a set of sensors, such as a measurement sensor, a gyro sensor, a geomagnetic sensor, and an acceleration sensor. The microphone 1608 converts sound input to the smart phone 1600 into an audio signal. The input apparatus 1609 includes, for example, a touch sensor configured to detect a touch on the screen of the display apparatus 1610, a keypad, a keyboard, a button, or a switch, and receives operations or information input from a user. The display apparatus 1610 includes a screen (such as a liquid crystal display (LCD) and an organic light emitting diode (OLED) display), and displays an output image of the smart phone 1600. The speaker 1611 converts an audio signal output from the smart phone 1600 into sound.

The wireless communication interface 1612 supports any cellular communication scheme (such as LTE and LTE-Advanced), and performs wireless communication. The wireless communication interface 1612 may generally include, for example, a BB processor 1613 and an RF circuit 1619. The BB processor 1613 can perform, for example, encoding/decoding, modulation/demodulation, and multiplexing/demultiplexing, and perform various types of signal processing for wireless communication. Meanwhile, the RF circuit 1614 may include, for example, a mixer, a filter, and an amplifier, and transmit and receive wireless signals via the antenna 1616. The wireless communication interface 1612 may be a chip module on which a BB processor 1613 and an RF circuit 1614 are integrated. As shown in FIG. 16, the wireless communication interface 1612 may include multiple BB processors 1613 and multiple RF circuits 1614. Although FIG. 16 illustrates an example in which the wireless communication interface 1612 includes multiple BB processors 1613 and multiple RF circuits 1614, the wireless communication interface 1612 may include a single BB processor 1613 or a single RF circuit 1614.

Furthermore, the wireless communication interface 1612 may support another type of wireless communication scheme, such as a short-range wireless communication scheme, a near field communication scheme, and a wireless local area network (LAN) scheme, in addition to the cellular communication schemes. In this case, the wireless communication interface 1612 may include a BB processor 1613 and an RF circuit 1614 for each wireless communication scheme.

Each of the antenna switches 1615 switches the connection destination of the antenna 1616 among a plurality of circuits (e.g., circuits for different wireless communication schemes) included in the wireless communication interface 1612.

Each of the antennas 1616 includes a single or multiple antenna elements (such as multiple antenna elements included in a MIMO antenna), and is used for the wireless communication interface 1612 to transmit and receive wireless signals. As shown in FIG. 16, the smart phone 1600 may include multiple antennas 1616. Although FIG. 16 shows an example in which the smart phone 1600 includes multiple antennas 1616, the smart phone 1600 may also include a single antenna 1616.

In addition, the smart phone 1600 may include an antenna 1616 for each wireless communication scheme. In this case, the antenna switch 1615 may be omitted from the configuration of the smart phone 1600.

The bus 1617 connects the processor 1601, the memory 1602, the storage apparatus 1603, the external connection interface 1604, the camera apparatus 1606, the sensor 1607, the microphone 1608, the input apparatus 1609, the display apparatus 1610, the speaker 1611, the wireless communication interface 1612, and the auxiliary controller 1619 to each other. The battery 1618 provides power to the various blocks of the smart phone 1600 shown in FIG. 16 via feed lines, which are partially shown as dashed lines in the figure. The auxiliary controller 1619 operates minimum necessary functions of the smart phone 1600, for example, in a sleep mode.

### Second Example

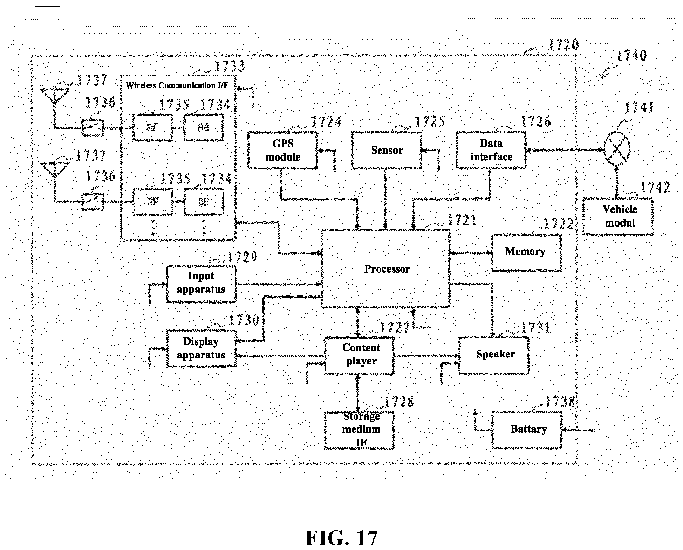

FIG. 17 is a block diagram showing an example of a schematic configuration of a car navigation device 1720 to which the technology of the present disclosure can be applied. The car navigation device 1720 includes a processor 1721, a memory 1722, a global positioning system (GPS) module 1724, a sensor 1725, a data interface 1726, a content player 1727, a storage medium interface 1728, an input apparatus 1729, a display apparatus 1730, a speaker 1731, a wireless communication interface 1733, one or more antenna switches 1736, one or more antennas 1737, and a battery 1738. In one implementation, the car navigation device 1720 (or the processor 1721) here may correspond to the above electronic device 50 and/or electronic device 100.

The processor 1721 may be, for example, a CPU or a SoC, and controls a navigation function and other functions of the car navigation device 1720. The memory 1722 includes RAM and ROM, and stores data and programs executed by the processor 1721.

The GPS module 1724 measures the location (such as latitude, longitude, and altitude) of the car navigation device 1720 using GPS signals received from GPS satellites. The sensor 1725 may include a set of sensors such as a gyro sensor, a geomagnetic sensor, and an air pressure sensor. The data interface 1726 is connected to, for example, an in-vehicle network 1741 via a terminal not shown, and acquires data (such as vehicle speed data) generated by the vehicle.

The content player 1727 reproduces content stored in storage medium (such as a CD and a DVD), which is inserted into the storage medium interface 1728. The input apparatus 1729 includes, for example, a touch sensor configured to detect a touch on the screen of the display apparatus 1730, a button, or a switch, and receives operations or information input from a user. The display apparatus 1730 includes a screen such as an LCD or OLED display, and displays an image of a navigation function or reproduced content. The speaker 1731 outputs sound of the navigation function or reproduced content.

The wireless communication interface 1733 supports any cellular communication scheme (such as LTE and LTE-Advanced), and performs wireless communication. The wireless communication interface 1733 may generally include, for example, a BB processor 1734 and an RF circuit 1735. The BB processor 1734 may perform, for example, encoding/decoding, modulation/demodulation, and multiplexing/demultiplexing, and perform various types of signal processing for wireless communication. Meanwhile, the RF circuit 1735 may include, for example, a mixer, a filter, and an amplifier, and transmit and receive wireless signals via the antenna 1737. The wireless communication interface 1733 can also be a chip module on which the BB processor 1734 and the RF circuit 1735 are integrated. As shown in FIG. 17, the wireless communication interface 1733 may include multiple BB processors 1734 and multiple RF circuits 1735. Although FIG. 17 illustrates an example in which the wireless communication interface 1733 includes multiple BB processors 1734 and multiple RF circuits 1735, the wireless communication interface 1733 may also include a single BB processor 1734 or a single RF circuit 1735.

Furthermore, the wireless communication interface 1733 may support another type of wireless communication scheme, such as a short-range wireless communication scheme, a near field communication scheme, and a wireless LAN scheme, in addition to the cellular communication schemes. In this case, the wireless communication interface 1733 may include the BB processor 1734 and the RF circuit 1735 for each wireless communication scheme.

Each of the antenna switches 1736 switches the connection destination of the antenna 1737 among a plurality of circuits (such as circuits for different wireless communication schemes) included in the wireless communication interface 1733.

Each of the antennas 1737 includes a single or multiple antenna elements (such as multiple antenna elements included in a MIMO antenna), and is used for the wireless communication interface 1733 to transmit and receive wireless signals. As shown in FIG. 17, the car navigation device 1720 may include multiple antennas 1737. Although FIG. 17 illustrates an example in which the car navigation device 1720 includes multiple antennas 1737, the car navigation device 1720 may also include a single antenna 1737.

Furthermore, the car navigation device 1720 may include an antenna 1737 for each wireless communication scheme. In this case, the antenna switch 1736 can be omitted from the configuration of the car navigation device 1720.

The battery 1738 provides power to various blocks of the car navigation device 1720 shown in FIG. 17 via feeder lines, which are partially shown as dashed lines in the figure. The battery 1738 accumulates electric power supplied from the vehicle.

The technology of the present disclosure may also be implemented as an in-vehicle system (or vehicle) 1740 including one or more blocks of the car navigation device 1720, the in-vehicle network 1741, and the vehicle module 1742. The vehicle module 1742 generates vehicle data (such as vehicle speed, engine speed, and fault information), and outputs the generated data to the in-vehicle network 1741.

The exemplary embodiments of the present disclosure have been described above with reference to the accompanying drawings, but the present disclosure is of course not limited to the above examples. Those skilled in the art may find various alterations and modifications within the scope of the appended claims, and it should be understood that these alterations and modifications will naturally fall within the technical scope of the present disclosure.

It should be understood that machine-executable instructions in a machine-readable storage medium or program product according to embodiments of the present disclosure can be configured to perform operations corresponding to the device and method embodiments described above. When referring to the above device and method embodiments, the embodiments of the machine-readable storage medium or program product will be apparent to those skilled in the art, and therefore description thereof will not be repeated. Machine-readable storage media and program products for carrying or including the above machine-executable instructions also fall within the scope of the present disclosure . Such storage media may include, but are not limited to, a floppy disk, an optical disk, a magneto-optical disk, a memory card, a memory stick, and the like.

In addition, it should be understood that the series of processes and devices described above may also be implemented by software and/or firmware. In the case of be implemented by software and/or firmware, corresponding programs constituting corresponding software are stored in a storage medium of a relevant device (for example, the memory 104, 504, 804, or 1004 of the electronic device 10 shown in FIG. 1, the electronic device 50 shown in FIG. 5, the electronic device 80 shown in FIG. 8 or the electronic device 100 shown in FIG. 10), which, when executed, can perform various functions.

For example, a plurality of functions included in one unit in the above embodiments may be implemented by separate apparatus. Alternatively, the plurality of functions implemented by multiple units in the above embodiments may be implemented by separate apparatus, respectively. Additionally, one of the above functions may be implemented by multiple units. Needless to say, such a configuration is included in the technical scope of the present disclosure.

In this specification, the steps described in the flowchart include not only processes performed in time sequence in the stated order, but also processes performed in parallel or individually rather than necessarily in time sequence. Furthermore, even in the steps processed in time sequence, needless to say, the order can be appropriately changed.

Although the present disclosure and its advantages have been described in detail, it should be understood that various changes, substitutions and alterations can be made herein without departing from the spirit and scope of the disclosure as defined by the appended claims. Furthermore, the terms "comprise", "include" or any other variation thereof in embodiments of the present disclosure are intended to encompass a non-exclusive inclusion, such that a process, method, article or device comprising a series of elements includes not only those elements, but also include other elements not expressly listed, or include elements inherent to such a process, method, article or device. Without further limitation, an element defined by the phrase "comprising one..." does not preclude the presence of additional identical elements in a process, method, article or device that includes the element.

In addition, the present disclosure may also have the following configurations:
(1) An electronic device for a control device side of a wireless communication system, comprising:
   a processing circuitry configured to perform Search Space Set, SSS switching based on monitoring capability of a terminal device by:
   receiving, from the terminal device, capability information indicating one or more monitoring capabilities supported by the terminal device and monitoring capability identifiers, each associated with each monitoring capability;
   associating one or more SSSs associated with each of the one or more monitoring capabilities with a monitoring capability identifier associated with the monitoring capability;
   transmitting, to the terminal device SSS configuration information, wherein, the SSS configuration information at least indicates a monitoring capability identifier associated with each SSS; and
   transmitting, to the terminal device, Downlink Control Information, DCI comprising a first monitoring capability identifier, so as to indicate one or more SSSs to be monitored by the terminal device.
(2) The electronic device of (1), wherein the processing circuitry is further configured to transmit, to the terminal device the DCI comprising the first monitoring capability identifier in response to receiving a second monitoring capability identifier from the terminal device, wherein the second monitoring capability identifier indicates a Search Space Set Bundle, SSSB consisting of one or more SSSs associated with the second monitoring capability identifier to which the terminal device expects to switch.
(3) The electronic device of (2), wherein
   the first monitoring capability identifier comprised in the DCI is the same as the second monitoring capability identifier, indicating the terminal device to switch to the SSSB to perform monitoring; or
   the first monitoring capability identifier comprised in the DCI is different from the second monitoring capability identifier, indicating the terminal device to perform monitoring on an SSSB consisting of one or more SSSs associated with the first monitoring capability identifier.
(4) The electronic device of any of (1) - (3), wherein,
   the one or more monitoring capabilities comprise one or more of: one or more types of monitoring spans, one or more span groups each consisting of a portion or all of multiple types of monitoring spans, per-slot monitoring capability and per-multi-slot monitoring capability.
(5) The electronic device of any of (1) - (3), wherein the processing circuitry is further configured to inform the terminal device whether to enable the SSS switching based on monitoring capability of the terminal device via a Radio Resource Control, RRC signaling.
(6) The electronic device of (2), wherein the processing circuitry is further configured to be able to receive the second monitoring capability identifier via User Assistance Information, UAI or a Media Access Control layer's Control Element, MAC CE.
(7) The electronic device of (1), wherein the DCI further includes information indicating a Search Space Set Group, SSSG, so as to indicate the terminal device to switch to one or more SSSs that overlap between an SSSB consisting of the one or more SSSs associated with the first monitoring capability identifier and the SSSG to perform monitoring.
(8) The electronic device of (1) or (7), wherein the DCI further includes information indicating a DCI format or size, such that the terminal device only monitors, on the one or more SSSs to be monitored, candidate Physical Downlink Control Channels, PDCCHs complying with the DCI format or size indicated by the information in the DCI within a predetermined period, and restores to monitor all candidate PDCCHs corresponding to all DCI formats and sizes when the predetermined period expires, wherein, the predetermined period is determined by configuring a timer to the terminal device.
(9) A method for a control device side of a wireless communication system, comprising:
   performing Search Space Set, SSS switching based on monitoring capability of a terminal device by:
   receiving, from the terminal device, capability information indicating one or more monitoring capabilities supported by the terminal device and monitoring capability identifiers, each associated with each monitoring capability;
   associating one or more SSSs associated with each of the one or more monitoring capabilities with a monitoring capability identifier associated with the monitoring capability;
   transmitting, to the terminal device SSS configuration information, wherein, the SSS configuration information at least indicates a monitoring capability identifier associated with each SSS; and
   transmitting, to the terminal device, Downlink Control Information, DCI comprising a first monitoring capability identifier, so as to indicate the one or more SSSs to be monitored by the terminal device.
(10) An electronic device for a terminal device side of a wireless communication system, comprising:
   a processing circuitry configured to perform Search Space Set, SSS switching based on monitoring capability of the electronic device by:
   transmitting, to a base station, capability information indicating one or more monitoring capabilities supported by the electronic device and monitoring capability identifiers, each associated with each monitoring capability, such that the base station is able to associate one or more SSSs associated with each monitoring capability of the one or more monitoring capabilities with a monitoring capability identifier associated with the monitoring capability;
   receiving, from the base station, SSS configuration information, wherein, the SSS configuration information at least indicates a monitoring capability identifier associated with each SSS; and
   receiving, from the base station, Downlink Control Information, DCI comprising a first monitoring capability identifier, the DCI indicating one or more SSSs to be monitored to by the electronic device.
(11) The electronic device of (10), wherein the processing circuitry is further configured to:
   transmit a second monitoring capability identifier to the base station, wherein the second monitoring capability identifier indicates a Search Space Set Bundle, SSSB consisting of one or more SSSs associated with the second monitoring capability identifier to which the electronic device expects to switch.
(12) The electronic device of (11), wherein,
   the first monitoring capability identifier comprised in the DCI is the same as the second monitoring capability identifier, and switching to the SSSB to perform monitoring in response to receiving the DCI; or
   the first monitoring capability identifier comprised in the DCI is different from the second monitoring capability identifier, and, performing monitoring on an SSSB consisting of one or more SSSs associated with the first monitoring capability identifier in response to receiving the DCI.
(13) The electronic device of any of (10) - (1 2), wherein
   the one or more monitoring capabilities comprise one or more of: one or more types of monitoring spans, one or more span groups each consisting of a portion or all of multiple types of monitoring spans, per-slot monitoring capability and per-multi-slot monitoring capability.
(14) The electronic device of any of (10) to (12), wherein the processing circuitry is further configured to receive a Radio Resource Control, RRC signaling informing whether to enable the SSS switching based on monitoring capability of the electronic device.
(15) The electronic device of (11), wherein the processing circuitry is further configured to be able to transmit the second monitoring capability identifier via User Assistance Information, UAI or a Media Access Control layer's Control Element, MAC CE.
(16) The electronic device of (10), wherein,
   the DCI further includes information indicating a Search Space Set Group, SSSG, and the processing circuitry is further configured to, in response to receiving the DCI, switch to one or more SSSs that overlap between an SSSB consisting of the one or more SSSs associated with the first monitoring capability identifier and the SSSG to perform monitoring.
(17) The electronic device of (10) or (16), wherein the DCI further includes information indicating a DCI format or size, and the processing circuitry is further configured to, in response to receiving the DCI, cause the electronic device to only monitor, on the one or more SSSs to be monitored, candidate Physical Downlink Control Channels, PDCCHs complying with the DCI format or size indicated by the information in the DCI within a predetermined period, and restores to monitor all candidate PDCCHs corresponding to all DCI formats and sizes when the predetermined period expires, wherein the predetermined period is determined by a timer configured by the base station to the electronic device.
(18) A method for a terminal device side of a wireless communication system, comprising:
   performing Search Space Set, SSS switching based on monitoring capability of the terminal device by:
   transmitting, to a base station, capability information indicating one or more monitoring capabilities supported by the terminal device and monitoring capability identifiers, each associated with each monitoring capability, such that the base station is able to associating one or more SSSs associated with each of the one or more monitoring capabilities with a monitoring capability identifier associated with the monitoring capability;
   receiving SSS configuration information from the base station, wherein, the SSS configuration information at least indicates a monitoring capability identifier associated with each SSS; and
   receiving, from the base station, Downlink control information, DCI comprising a first monitoring capability identifier, the DCI indicating one or more SSSs to be monitored by the terminal device.
(19) An electronic device for a control device side of a wireless communication system, comprising:
   a processing circuitry configured to:
   transmit, to the terminal device, Downlink Control Information, DCI comprising information indicating one or more Search Space Sets, SSSs to be monitored,
   wherein, the DCI includes information indicating a DCI format or size, and
   wherein, a timer is configured to the terminal device, such that the terminal device only monitors, on the one or more SSSs, candidate Physical Downlink Control Channels, PDCCHs complying with the DCI format or size indicated by the information in the DCI within a predetermined period specified by the timer, and restores to monitor all candidate PDCCHs corresponding to all DCI formats and sizes when the predetermined period specified by the timer expires.
(20) The electronic device of (19), wherein
   the information indicating the DCI format or size is information indicating whether the DCI format or size to be monitored subsequently belongs to the same or a different DCI format set from the format or size of said DCI that has been decoded, and
   in the case of belonging to the same DCI format set, the information indicates the terminal device to only monitor, on the one or more SSSs, candidate Physical Downlink Control Channels, PDCCHs complying with the DCI format set to which said DCI that has been decoded belongs within the predetermined period specified by the timer;
   in the case of belonging to a different DCI format set, the information indicates the terminal device to only monitor, on the one or more SSSs, candidate Physical Downlink Control Channels, PDCCHs not complying with the DCI format set to which said DCI that has been decoded belongs within the predetermined period specified by the timer.
(21) The electronic device of (19) or (20), wherein,
   the DCI includes information indicating a Search Space Set Group, SSSG, and the one or more SSSs to be monitored are the one or more SSSs consisting the SSSG.
(22) The electronic device of (19) or (20), wherein the processing circuitry is further configured to, before transmitting said DCI:
   receiving, from the terminal device, capability information indicating one or more monitoring capabilities supported by the terminal device and monitoring capability identifiers, each associated with each monitoring capability;
   associating one or more SSSs associated with each of the one or more monitoring capabilities with a monitoring capability identifier associated with the monitoring capability;
   transmitting, to the terminal device SSS configuration information, wherein, the SSS configuration information at least indicates a monitoring capability identifier associated with each SSS,
   wherein, said DCI further includes a first monitoring capability identifier, and the one or more SSSs to be monitored are one or more SSSs associated with the first monitoring capability identifier.
(23) The electronic device of (22), wherein the DCI further includes information indicating a Search Space Set Group, SSSG, and the one or more SSSs to be monitored are one or more SSSs that overlap between one or more SSSs associated with a second monitoring capability identifier and the SSSG.
(24) A method for a control device side of a wireless communication system, comprising:
   transmitting, to a terminal device, Downlink Control Information, DCI comprising information indicating one or more Search Space Sets, SSSs to be monitored,
   wherein, the DCI includes information indicating a DCI format or size, and
   wherein, a timer is configured to a terminal device, such that the terminal device only monitors, on the one or more SSSs, candidate Physical Downlink Control Channels, PDCCHs complying with the DCI format or size indicated by the information in the DCI within a predetermined period specified by the timer, and restores to monitor all candidate PDCCHs corresponding to all DCI formats and sizes when the predetermined period specified by the timer expires.
(25) An electronic device for a terminal device side of a wireless communication system, comprising:
   a processing circuitry configured to:
   receive, from a base station, Downlink Control Information, DCI comprising information indicating one or more Search Space Sets, SSSs to be monitored,
   wherein, the DCI includes information indicating a DCI format or size, and
   wherein, the electronic device is configured with a timer by the base station, and the electronic device only monitors, on the one or more SSSs, candidate Physical Downlink Control Channels, PDCCHs complying with the DCI format or size indicated by the information in the DCI within a predetermined period specified by the timer, and restores to monitor all candidate PDCCHs corresponding to all DCI formats and sizes when the predetermined period specified by the timer expires.
(26) The electronic device of (25), wherein
   the information indicating the DCI format or size is information indicating whether the DCI format or size to be monitored subsequently belongs to the same or a different DCI format set from the format or size of said DCI that has been decoded, and the processing circuitry is further configured to:
   in the case of belonging to the same DCI format set, only monitor, on the one or more SSSs, candidate Physical Downlink Control Channels, PDCCHs complying with the DCI format set to which said DCI that has been decoded belongs within the predetermined period specified by the timer;
   in the case of belonging a different DCI format set, only monitor, on the one or more SSSs, candidate Physical Downlink Control Channels, PDCCHs not complying with the DCI format set to which said DCI that has been decoded belongs within the predetermined period specified by the timer.
(27) The electronic device of (25) or (26), wherein,
   the DCI also includes information indicating a Search Space Set Group, SSSG, and the one or more SSSs to be monitored are the one or more SSSs consisting the SSSG.
(28) The electronic device of (25) or (26), wherein the processing circuitry is further configured to, before receiving said DCI:
   transmitting, to the base station, capability information indicating one or more monitoring capabilities supported by the electronic device and monitoring capability identifiers, each associated with each monitoring capability, such that the base station is able to associate one or more SSSs associated with each of the one or more monitoring capabilities with a monitoring capability identifier associated with the monitoring capability;
   receiving SSS configuration information from the base station, wherein, the SSS configuration information at least indicates a monitoring capability identifier associated with each SSS,
   wherein, the DCI further includes a first monitoring capability identifier, and in response to receiving the DCI, performing monitoring on one or more SSSs associated with the first monitoring capability identifier.
(29) The electronic device of (28), wherein the DCI further includes information indicating a Search Space Set Group, SSSG, and the one or more SSSs to be monitored are one or more SSSs that overlap between one or more SSSs associated with a second monitoring capability identifier and the SSSG.
(30) A method for a terminal device side of a wireless communication system, comprising:
   receiving, from a base station, Downlink Control Information, DCI comprising information indicating one or more Search Space Sets, SSSs to be monitored,
   wherein, the DCI includes information indicating a DCI format or size, and
   wherein, the terminal device is configured with a timer by the base station, and the terminal device only monitors, on the one or more SSSs, candidate Physical Downlink Control Channels, PDCCHs complying with the DCI format or size indicated by the information in the DCI within a predetermined period specified by the timer, and restores to monitor all candidate PDCCHs corresponding to all DCI formats and sizes when the predetermined period specified by the timer expires.
(31) A non-transitory computer-readable storage medium having executable instructions stored thereon, which, when executed, implement the method of any of (9), (18), (24), and (30).
(32) A device comprising:
   a processor,
   a storage having executable instructions stored thereon, which, when executed, implement the method of any of (9), (18), (24), and (30).

## Claims

1. An electronic device for a control device side of a wireless communication system, comprising:
a processing circuitry configured to perform Search Space Set, SSS switching based on monitoring capability of a terminal device by:
receiving, from the terminal device, capability information indicating one or more monitoring capabilities supported by the terminal device and monitoring capability identifiers, each associated with each monitoring capability;
associating one or more SSSs associated with each of the one or more monitoring capabilities with a monitoring capability identifier associated with the monitoring capability;
transmitting, to the terminal device SSS configuration information, wherein, the SSS configuration information at least indicates a monitoring capability identifier associated with each SSS; and
transmitting, to the terminal device, Downlink Control Information, DCI comprising a first monitoring capability identifier, so as to indicate one or more SSSs to be monitored by the terminal device.

2. The electronic device of claim 1, wherein the processing circuitry is further configured to transmit, to the terminal device the DCI comprising the first monitoring capability identifier in response to receiving a second monitoring capability identifier from the terminal device, wherein the second monitoring capability identifier indicates a Search Space Set Bundle, SSSB consisting of one or more SSSs associated with the second monitoring capability identifier to which the terminal device expects to switch.

3. The electronic device of claim 2, wherein,
the first monitoring capability identifier comprised in the DCI is the same as the second monitoring capability identifier, indicating the terminal device to switch to the SSSB to perform monitoring; or
the first monitoring capability identifier comprised in the DCI is different from the second monitoring capability identifier, indicating the terminal device to perform monitoring on an SSSB consisting of one or more SSSs associated with the first monitoring capability identifier.

4. The electronic device of any of claims 1 to 3, wherein
the one or more monitoring capabilities comprise one or more of: one or more types of monitoring spans, one or more span groups each consisting of a portion or all of multiple types of monitoring spans, per-slot monitoring capability and per-multi-slot monitoring capability.

5. The electronic device of any of claims 1 to 3, wherein the processing circuitry is further configured to inform the terminal device whether to enable the SSS switching based on monitoring capability of the terminal device via a Radio Resource Control, RRC signaling.

6. The electronic device of claim 2, wherein the processing circuitry is further configured to be able to receive the second monitoring capability identifier via User Assistance Information, UAI or a Media Access Control layer's Control Element, MAC CE.

7. The electronic device of claim 1, wherein the DCI further includes information indicating a Search Space Set Group, SSSG, so as to indicate the terminal device to switch to one or more SSSs that overlap between an SSSB consisting of the one or more SSSs associated with the first monitoring capability identifier and the SSSG to perform monitoring.

8. The electronic device of claim 1 or 7, wherein the DCI further includes information indicating a DCI format or size, such that the terminal device only monitors, on the one or more SSSs to be monitored, candidate Physical Downlink Control Channels, PDCCHs complying with the DCI format or size indicated by the information in the DCI within a predetermined period, and restores to monitor all candidate PDCCHs corresponding to all DCI formats and sizes when the predetermined period expires, wherein, the predetermined period is determined by configuring a timer to the terminal device.

9. A method for a control device side of a wireless communication system, comprising:
performing Search Space Set, SSS switching based on monitoring capability of a terminal device by:
receiving, from the terminal device, capability information indicating one or more monitoring capabilities supported by the terminal device and monitoring capability identifiers, each associated with each monitoring capability;
associating one or more SSSs associated with each of the one or more monitoring capabilities with a monitoring capability identifier associated with the monitoring capability;
transmitting, to the terminal device SSS configuration information, wherein, the SSS configuration information at least indicates a monitoring capability identifier associated with each SSS; and
transmitting, to the terminal device, Downlink Control Information, DCI comprising a first monitoring capability identifier, so as to indicate the one or more SSSs to be monitored by the terminal device.

10. An electronic device for a terminal device side of a wireless communication system, comprising:
a processing circuitry configured to perform Search Space Set, SSS switching based on monitoring capability of the electronic device by:
transmitting, to a base station, capability information indicating one or more monitoring capabilities supported by the electronic device and monitoring capability identifiers, each associated with each monitoring capability, such that the base station is able to associate one or more SSSs associated with each monitoring capability of the one or more monitoring capabilities with a monitoring capability identifier associated with the monitoring capability;
receiving, from the base station, SSS configuration information, wherein, the SSS configuration information at least indicates a monitoring capability identifier associated with each SSS; and
receiving, from the base station, Downlink Control Information, DCI comprising a first monitoring capability identifier, the DCI indicating one or more SSSs to be monitored by the electronic device.

11. The electronic device of claim 10, wherein the processing circuitry is further configured to:
transmit a second monitoring capability identifier to the base station, wherein the second monitoring capability identifier indicates a Search Space Set Bundle, SSSB consisting of one or more SSSs associated with the second monitoring capability identifier to which the electronic device expects to switch.

12. The electronic device of claim 11, wherein,
the first monitoring capability identifier comprised in the DCI is the same as the second monitoring capability identifier, and switching to the SSSB to perform monitoring in response to receiving the DCI; or
the first monitoring capability identifier comprised in the DCI is different from the second monitoring capability identifier, and, performing monitoring on an SSSB consisting of one or more SSSs associated with the first monitoring capability identifier in response to receiving the DCI.

13. The electronic device of any of claims 10 to 12, wherein
the one or more monitoring capabilities comprise one or more of: one or more types of monitoring spans, one or more span groups each consisting of a portion or all of multiple types of monitoring spans, per-slot monitoring capability and per-multi-slot monitoring capability.

14. The electronic device of any of claims 10-12, wherein the processing circuitry is further configured to receive a Radio Resource Control, RRC signaling informing whether to enable the SSS switching based on monitoring capability of the electronic device.

15. The electronic device of claim 11, wherein the processing circuitry is further configured to be able to transmit the second monitoring capability identifier via User Assistance Information, UAI or a Media Access Control layer's Control Element, MAC CE.

16. The electronic device of claim 10, wherein,
the DCI further includes information indicating a Search Space Set Group, SSSG, and the processing circuitry is further configured to, in response to receiving the DCI, switch to one or more SSSs that overlap between an SSSB consisting of the one or more SSSs associated with the first monitoring capability identifier and the SSSG to perform monitoring.

17. The electronic device of claim 10 or 16, wherein the DCI further includes information indicating a DCI format or size, and the processing circuitry is further configured to, in response to receiving the DCI, cause the electronic device to only monitor, on the one or more SSSs to be monitored, candidate Physical Downlink Control Channels, PDCCHs complying with the DCI format or size indicated by the information in the DCI within a predetermined period, and restores to monitor all candidate PDCCHs corresponding to all DCI formats and sizes when the predetermined period expires, wherein the predetermined period is determined by a timer configured by the base station to the electronic device.

18. A method for a terminal device side of a wireless communication system, comprising:
performing Search Space Set, SSS switching based on monitoring capability of the terminal device by:
transmitting, to a base station, capability information indicating one or more monitoring capabilities supported by the terminal device and monitoring capability identifiers, each associated with each monitoring capability, such that the base station is able to associating one or more SSSs associated with each of the one or more monitoring capabilities with a monitoring capability identifier associated with the monitoring capability;
receiving SSS configuration information from the base station, wherein, the SSS configuration information at least indicates a monitoring capability identifier associated with each SSS; and
receiving, from the base station, Downlink control information, DCI comprising a first monitoring capability identifier, the DCI indicating one or more SSSs to be monitored by the terminal device.

19. An electronic device for a control device side of a wireless communication system, comprising:
a processing circuitry configured to:
transmit, to the terminal device, Downlink Control Information, DCI comprising information indicating one or more Search Space Sets, SSSs to be monitored,
wherein, the DCI includes information indicating a DCI format or size, and
wherein, a timer is configured to the terminal device, such that the terminal device only monitors, on the one or more SSSs, candidate Physical Downlink Control Channels, PDCCHs complying with the DCI format or size indicated by the information in the DCI within a predetermined period specified by the timer, and restores to monitor all candidate PDCCHs corresponding to all DCI formats and sizes when the predetermined period specified by the timer expires.

20. The electronic device of claim 19, wherein
the information indicating the DCI format or size is information indicating whether the DCI format or size to be monitored subsequently belongs to the same or a different DCI format set from the format or size of said DCI that has been decoded, and
in the case of belonging to the same DCI format set, the information indicates the terminal device to only monitor, on the one or more SSSs, candidate Physical Downlink Control Channels, PDCCHs complying with the DCI format set to which said DCI that has been decoded belongs within the predetermined period specified by the timer;
in the case of belonging to a different DCI format set, the information indicates the terminal device to only monitor, on the one or more SSSs, candidate Physical Downlink Control Channels, PDCCHs not complying with the DCI format set to which said DCI that has been decoded belongs within the predetermined period specified by the timer.

21. The electronic device of claim 19 or 20, wherein,
the DCI includes information indicating a Search Space Set Group, SSSG, and the one or more SSSs to be monitored are the one or more SSSs consisting the SSSG.

22. The electronic device of claim 19 or 20, wherein the processing circuitry is further configured to, before transmitting said DCI:
receiving, from the terminal device, capability information indicating one or more monitoring capabilities supported by the terminal device and monitoring capability identifiers, each associated with each monitoring capability;
associating one or more SSSs associated with each of the one or more monitoring capabilities with a monitoring capability identifier associated with the monitoring capability;
transmitting, to the terminal device the SSS configuration information, wherein, the SSS configuration information at least indicates a monitoring capability identifier associated with each SSS,
wherein, said DCI further includes a first monitoring capability identifier, and the one or more SSSs to be monitored are one or more SSSs associated with the first monitoring capability identifier.

23. The electronic device of claim 22, wherein the DCI further includes information indicating a Search Space Set Group, SSSG, and the one or more SSSs to be monitored are one or more SSSs that overlap between one or more SSSs associated with a second monitoring capability identifier and the SSSG.

24. A method for a control device side of a wireless communication system, comprising:
transmitting, to a terminal device, Downlink Control Information, DCI comprising information indicating one or more Search Space Sets, SSSs to be monitored,
wherein, the DCI includes information indicating a DCI format or size, and
wherein, a timer is configured to a terminal device, such that the terminal device only monitors, on the one or more SSSs, candidate Physical Downlink Control Channels, PDCCHs complying with the DCI format or size indicated by the information in the DCI within a predetermined period specified by the timer, and restores to monitor all candidate PDCCHs corresponding to all DCI formats and sizes when the predetermined period specified by the timer expires.

25. An electronic device for a terminal device side of a wireless communication system, comprising:
a processing circuitry configured to:
receive, from a base station, Downlink Control Information, DCI comprising information indicating one or more Search Space Sets, SSSs to be monitored,
wherein, the DCI includes information indicating a DCI format or size, and
wherein, the electronic device is configured with a timer by the base station, and the electronic device only monitors, on the one or more SSSs, candidate Physical Downlink Control Channels, PDCCHs complying with the DCI format or size indicated by the information in the DCI within a predetermined period specified by the timer, and restores to monitor all candidate PDCCHs corresponding to all DCI formats and sizes when the predetermined period specified by the timer expires.

26. The electronic device of claim 25, wherein
the information indicating the DCI format or size is information indicating whether the DCI format or size to be monitored subsequently belongs to the same or a different DCI format set from the format or size of said DCI that has been decoded, and the processing circuitry is further configured to:
in the case of belonging to the same DCI format set, only monitor, on the one or more SSSs, candidate Physical Downlink Control Channels, PDCCHs complying with the DCI format set to which said DCI that has been decoded belongs within the predetermined period specified by the timer;
in the case of belonging a different DCI format set, only monitor, on the one or more SSSs, candidate Physical Downlink Control Channels, PDCCHs not complying with the DCI format set to which said DCI that has been decoded belongs within the predetermined period specified by the timer.

27. The electronic device of claim 25 or claim 26, wherein, the DCI also includes information indicating a Search Space Set Group, SSSG, and the one or more SSSs to be monitored are the one or more SSSs consisting the SSSG.

28. The electronic device of claim 25 or 26, wherein the processing circuitry is further configured to, before receiving said DCI:
transmitting, to the base station, capability information indicating one or more monitoring capabilities supported by the electronic device and monitoring capability identifiers, each associated with each monitoring capability, such that the base station is able to associate one or more SSSs associated with each of the one or more monitoring capabilities with a monitoring capability identifier associated with the monitoring capability;
receiving SSS configuration information from the base station, wherein, the SSS configuration information at least indicates a monitoring capability identifier associated with each SSS,
wherein, the DCI further includes a first monitoring capability identifier, and in response to receiving the DCI, performing monitoring on one or more SSSs associated with the first monitoring capability identifier.

29. The electronic device of claim 28, wherein the DCI further includes information indicating a Search Space Set Group, SSSG, and the one or more SSSs to be monitored are one or more SSSs that overlap between one or more SSSs associated with a second monitoring capability identifier and the SSSG.

30. A method for a terminal device side of a wireless communication system, comprising:
receiving, from a base station, Downlink Control Information, DCI comprising information indicating one or more Search Space Sets, SSSs to be monitored,
wherein, the DCI includes information indicating a DCI format or size, and
wherein, the terminal device is configured with a timer by the base station, and the terminal device only monitors, on the one or more SSSs, candidate Physical Downlink Control Channels, PDCCHs complying with the DCI format or size indicated by the information in the DCI within a predetermined period specified by the timer, and restores to monitor all candidate PDCCHs corresponding to all DCI formats and sizes when the predetermined period specified by the timer expires.

31. A non-transitory computer-readable storage medium having executable instructions stored thereon, which, when executed, implement the method of any of claims 9, 18, 24, and 30.

32. A device comprising:
a processor,
a storage having executable instructions stored thereon, which, when executed, implement the method of any of claims 9, 18, 24, and 30.
